(19) Europäisches Patentamt
European Patent Office
Office européen des brevets

(11) **EP 2 144 078 A1**

(12) **EUROPEAN PATENT APPLICATION**

(43) Date of publication:
**13.01.2010 Bulletin 2010/02**

(51) Int Cl.:
*G01S 5/14* (2006.01)  *H04W 64/00* (2009.01)

(21) Application number: **09164996.2**

(22) Date of filing: **09.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.07.2008 JP 2008179485**
**29.08.2008 JP 2008222120**

(71) Applicant: **NTT DoCoMo, Inc.**
**Chiyoda-ku**
**Tokyo 100-6150 (JP)**

(72) Inventors:
• **Oda, Yasuhiro**
**Tokyo 100-6150 (JP)**
• **Shen, Jiyun**
**Tokyo 100-6150 (JP)**

(74) Representative: **Viering, Jentschura & Partner**
**Grillparzerstrasse 14**
**81675 München (DE)**

(54) **Positioning system, positioning method, and positioning program**

(57) An object of the present invention is to obtain a positioning result according to a condition of a receiver in a shorter period of time. A positioning server 10 is a positioning system which estimates a position of a cellular terminal 20 having a cellular communication function and a function to receive a signal used in GPS positioning. The positioning server 10 is provided with a radio communication information acquiring unit 14 to acquire information about cellular communication in the cellular terminal 20, an effectiveness estimating unit 15 to estimate the effectiveness of the GPS positioning, based on the information about cellular communication, and a UPS positioning control unit 17 to control execution of the GPS positioning of the cellular terminal 20, based on the estimated effectiveness.

Fig.1

EP 2 144 078 A1

**Description**

BACKGROUND OF THE INVENTION

Field of the Invention

The present invention relates to a positioning system, positioning method, and positioning program for estimating a position of a receiver.

Related Background Art

There is a conventionally known technology for positioning a receiver by making use of GPS (Global Positioning System) (e.g., cf. Takeyasu Isaka, "GPS Gijutsu Nyumon (Introduction to GPS Technology)," Tokyo Denki University Press, February 28, 2003 (Non-patent Document 1)). Another known system is AGPS (Assisted GPS) to perform positioning by making use of assist data showing positions of satellites or the like acquired from a mobile communication network.

Where the positioning by GPS is unsuccessful (i.e., when the positioning result by GPS is unfixed), there are methods of carrying out base station positioning to perform the positioning using signals in the mobile communication network, or positioning called Hybrid to perform the positioning using both signals from GPS satellites and signals in the mobile communication network.

SUMMARY OF THE INVENTION

In the conventional methods, however, whether the positioning by GPS was successful was not determine until the positioning was actually started. In addition, the GPS positioning involving the foregoing determination process took some time. A UE-based AGPS positioning method for letting a receiver perform the operation process required a particularly long time. For example, in indoor environments where the signals from GPS satellites cannot be received, the GPS positioning becomes disabled, and then another positioning such as the base station positioning is initiated; therefore, the total time for positioning was considerably long. In this case, while the positioning took the considerably long time, a return was the result with poor positioning accuracy. There was another problem that in urban areas and the like good GPS positioning accuracy was not achieved even outdoors because of effect of multipath.

The present invention has been accomplished in view of the above circumstances and an object of the present invention is to provide a positioning system, positioning method, and positioning program capable of obtaining the positioning result according to a condition of the receiver in a shorter period of time.

In order to achieve the above object, a positioning system according to the present invention is a positioning system which estimates a position of a receiver having a radio communication function and a function to receive a signal used in GPS positioning, the positioning system comprising: radio communication information acquiring means to acquire information about radio communication in the receiver; effectiveness estimating means to estimate effectiveness of the GPS positioning, based on the information about the radio communication acquired by the radio communication information acquiring means; and GPS positioning controlling means to control execution of the GPS positioning of the receiver, based on the effectiveness estimated by the effectiveness estimating means.

The positioning system according to the present invention is configured to acquire the information about the radio communication in the receiver. The effectiveness of the GPS positioning is then estimated based on the acquired information and the execution of the GPS positioning in the receiver is controlled based on the effectiveness. The foregoing information about the radio communication in the receiver is information according to a condition of the receiver. Therefore, it is feasible, for example, to perform the following control: when the receiver is in a condition in which it is easy to perform the GPS positioning, the GPS positioning is executed; when the receiver is in a condition in which it is not easy to perform the GPS positioning, the GPS positioning is not executed. As described above, the positioning system is able to perform the control on suitability of execution of the GPS positioning, without actually carrying out the GPS positioning which takes some time for the determination on suitability of execution. Namely, the positioning system according to the present invention is able to obtain the positioning result according to a condition of the receiver in a shorter period of time.

The positioning system is preferably configured as follows: the radio communication function of the receiver is a cellular communication function; when the GPS positioning is not executed by the control on execution of the GPS positioning, the GPS positioning controlling means performs such a control as to perform positioning of the receiver, based on a signal transmitted and received between the receiver and a base station. This configuration permits the positioning system to obtain the positioning result of the receiver even in the case where the GPS positioning is not carried out.

The positioning system is preferably configured as follows: it further comprises a positioning accuracy database storing information showing an accuracy of GPS positioning according to a positioning location; the radio communication function of the receiver is a cellular communication function; the radio communication information acquiring means calculates an approximate position of the receiver as the information about the radio communication, based on a signal from a base station received by the receiver; the effectiveness estimating means estimates the effectiveness of the GPS positioning by referring to the positioning accuracy database to acquire the information showing the accuracy of GPS positioning, using the approximate position calculated by the radio communication information acquiring means, as the positioning location. This configuration permits the positioning system to perform the control on suitability of execution of the GPS positioning, based on the accuracy of the GPS positioning according to the positioning location, thus enabling more appropriate implementation of the present invention.

Specifically, the information showing the accuracy of GPS positioning preferably contains information resulting from simulation of a reception condition of a radio wave from a GPS satellite according to the positioning location. Furthermore, the information showing the accuracy of GPS positioning is preferably based on information showing a degree of shielding of a GPS satellite according to the positioning location. In addition, the information showing the accuracy of GPS positioning is preferably based on information showing a type of land according to the positioning location. Moreover, the information showing the accuracy of GPS positioning is preferably based on information showing an accuracy of GPS positioning obtained by actual measurement according to the positioning location. Yet furthermore, the information showing the accuracy of GPS positioning is preferably based on a building coverage or floor-area ratio of land according to the positioning location. These configurations enhance the accuracy of the GPS positioning according to the positioning location, thereby enabling further appropriate implementation of the present invention.

The positioning system is preferably configured as follows: the radio communication information acquiring means determines whether the receiver is located indoors, based on an intensity of a radio communication signal received by the receiver, and defines a result of the determination as the information about the radio communication. Whether the GPS positioning can be executed is significantly linked to whether the receiver is located indoors. The aforementioned configuration permits the positioning system to appropriately determine whether the receiver is located indoors, thereby enabling more appropriate implementation of the present invention.

The positioning system is preferably configured as follows: the radio communication information acquiring means determines whether the receiver is located indoors, based on a temporal change in intensity of a radio communication signal received by the receiver, and defines a result of the determination as the information about the radio communication. The above configuration permits the positioning system to more appropriately determine whether the receiver is located indoors, based on the temporal change in intensity of the radio communication signal received by the receiver, thereby enabling more appropriate implementation of the present invention.

The positioning system is preferably configured as follows: the radio communication information acquiring means determines whether the receiver is located indoors, based on an originating source of a radio communication signal received by the receiver, and defines a result of the determination as the information about the radio communication. The foregoing configuration also permits the positioning system to appropriately determine whether the receiver is located indoors, thereby enabling more appropriate implementation of the present invention.

The positioning system is preferably configured as follows: the radio communication information acquiring means determines whether the receiver is located indoors, based on information contained in a radio communication signal received by the receiver, and defines a result of the determination as the information about the radio communication. The foregoing configuration also permits the positioning system to appropriately determine whether the receiver is located indoors, thereby enabling more appropriate implementation of the present invention.

The positioning system is preferably configured as follows: it further comprises a matching database storing information showing an accuracy of GPS positioning according to an intensity of a radio communication signal received by the receiver; the radio communication information acquiring means acquires information showing an intensity of a radio communication signal received by the receiver, as the information about the radio communication; the effectiveness estimating means estimates the effectiveness of the GPS positioning by comparing the information showing the intensity of the radio communication signal received by the receiver, acquired by the radio communication information acquiring means, with the information stored in the matching database. When the intensity of the radio communication signal received by the receiver is one according to a condition such as the position of the receiver, this configuration permits the positioning system to appropriately estimate the effectiveness of the GPS positioning, based on the actual measurement result of the GPS positioning or the like. This enables more appropriate implementation of the present invention.

The positioning system is preferably comprised of a positioning server connected to the receiver. In another configuration, the positioning system is preferably comprised of the receiver. These configurations enable secure implementation of the present invention.

Incidentally, the present invention can be described as the invention of the positioning system as described above, and it can also be described as the invention of a positioning method and positioning program as presented below. This is different only in category or the like and substantially the same invention, with the same action and effect.

Namely, a positioning method according to the present invention is a positioning method of estimating a position of a receiver having a radio communication function and a function to receive a signal used in GPS positioning, the positioning method comprising: a radio communication information acquiring step of acquiring information about radio communication in the receiver; an effectiveness estimating step of estimating effectiveness of the GPS positioning, based on the information about the radio communication acquired in the radio communication information acquiring step; and a GPS positioning controlling step of controlling execution of the GPS positioning of the receiver, based on the effectiveness estimated in the effectiveness estimating step.

A positioning program according to the present invention is a positioning program for letting a computer estimate a position of a receiver having a radio communication function and a function to receive a signal used in GPS positioning, the positioning program letting the computer execute: a radio communication information acquiring function to acquire information about radio communication in the receiver; an effectiveness estimating function to estimate effectiveness of the GPS positioning, based on the information about the radio communication acquired by the radio communication information acquiring function; and a GPS positioning controlling function to control execution of the GPS positioning of the receiver, based on the effectiveness estimated by the effectiveness estimating function.

The present invention permits, for example, the following control: when the receiver is in a condition in which it is easy to perform the GPS positioning, the GPS positioning is executed; when the receiver is in a condition in which it is not easy to perform the GPS positioning, the GPS positioning is not executed. It also allows the control on suitability of execution of the GPS positioning, without actually carrying out the GPS positioning which takes some time for determination on suitability of execution. Namely, the present invention enables us to obtain the positioning result according to a condition of the receiver in a shorter time.

BRIEF DESCRIPTION OF THE DRAWINGS

Fig. 1 is a drawing showing functional configurations of a positioning server being a positioning system and a cellular terminal being a receiver according to an embodiment of the present invention.
Fig. 2 is a drawing showing a hardware configuration of a cellular terminal according to an embodiment of the present invention.
Fig. 3 is a drawing showing information showing accuracies of GPS positioning according to positioning locations, which is stored in an estimation database.
Fig. 4 is a drawing schematically showing effects of buildings on radio waves from GPS satellites arriving at a cellular terminal.
Fig. 5 is a drawing showing a relation between distances from two cellular base stations and reception levels.
Fig. 6 is a drawing for explaining a method of determining whether a cellular terminal is located indoors or outdoors, based on distances from cellular base stations determined from radio wave levels.
Fig. 7 is a drawing showing information showing whether each cellular base station is located indoors or outdoors, which is held in the positioning server.
Fig. 8 is a drawing showing information showing base stations from which a cellular terminal received a signal.
Fig. 9 is a drawing showing information showing whether each wireless tag is located indoors or outdoors, which is held in the positioning server.
Fig. 10 is a drawing showing information showing wireless tags from which a cellular terminal read information.
Fig. 11 is a drawing showing information showing whether each access point of wireless LAN is located indoors or outdoors, which is held in the positioning server.
Fig. 12 is a drawing showing information showing access points of wireless LAN from which a cellular terminal received a signal.
Fig. 13 is a drawing showing a hardware configuration of a positioning server according to an embodiment of the present invention.
Fig. 14 is a flowchart showing processing (positioning method) executed by the positioning server according to an embodiment of the present invention.
Fig. 15 is a flowchart showing another example of processing (positioning method) executed by the positioning server according to an embodiment of the present invention.
Fig. 16 is a drawing showing a configuration of a positioning program according to an embodiment of the present invention.
Fig. 17 is a drawing showing information showing accuracies of GPS positioning according to intensities of radio communication signals received by a cellular terminal, which is stored in a matching database.
Fig. 18 is a drawing showing information showing accuracies of GPS positioning according to intensities of radio communication signals received by a cellular terminal, which is transmitted from the cellular terminal to the positioning server.

Fig. 19 is a drawing showing information showing intensities of radio communication signals received by a cellular terminal, which is transmitted from the cellular terminal to the positioning server.

DESCRIPTION OF THE PREFERRED EMBODIMENTS

The preferred embodiments of the positioning system and positioning method according to the present invention will be described below in detail with the drawings. In the description of the drawings the same elements will be denoted by the same reference symbols, without redundant description.

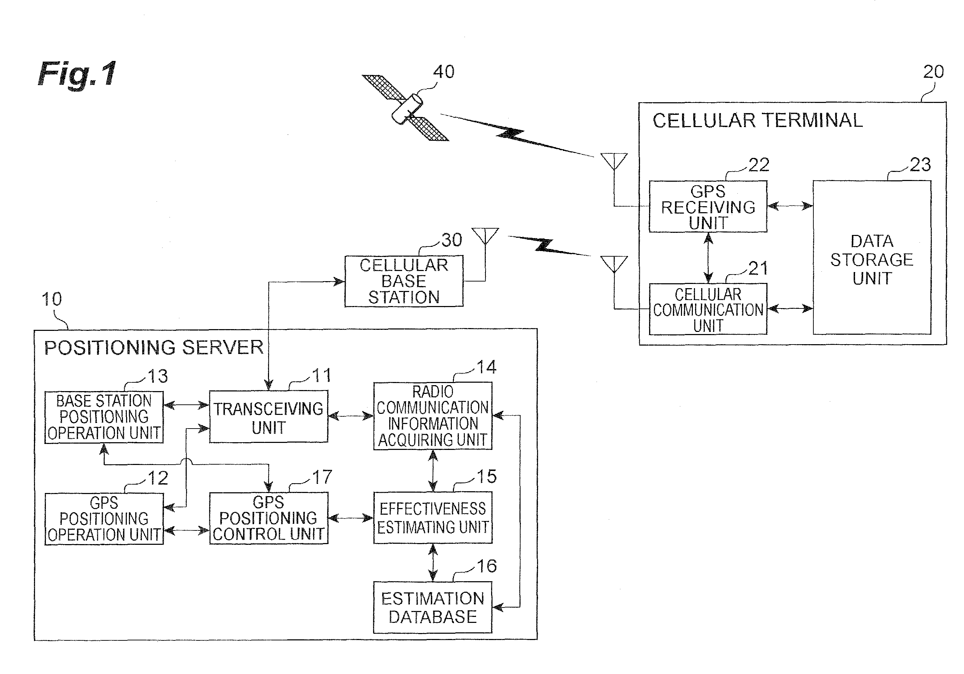

Fig. 1 shows a positioning server 10 which is a positioning system according to an embodiment of the present invention. The positioning server 10 is a device that estimates a position of cellular terminal 20 being a receiver according to the present embodiment. The (control of) positioning of the cellular terminal 20 by the positioning server 10 is carried out by making use of a framework of a cellular communication system (mobile communication system). The positioning server 10 is connected to a plurality of cellular base stations 30 included in the cellular communication system so that it can transmit and receive information to and from each cellular base station 30 and communicate with the cellular terminal 20 through the cellular base stations 30. The positioning server 10 may be included in the cellular communication system.

The cellular terminal 20 being a positioning target will be explained prior to detailed description of the positioning server 10 according to the present embodiment. The cellular terminal 20 is a device having a radio communication function and a function to receive a signal used in GPS positioning and, specifically, is constructed with cellular communication unit 21, GPS receiving unit 22, and data storage unit 23 as shown in Fig. 1.

The cellular communication unit 21 is a means that performs cellular communication (mobile communication) through radio communication with a plurality of cellular base stations 30 included in a cellular communication network (mobile communication network) of the cellular communication system. The cellular communication unit 21 is provided with an antenna for cellular communication and performs the cellular communication using the antenna. The cellular communication unit 21 performs normal cellular communication such as call communication and acquires information by cellular communication used for positioning of the own terminal 20 in the positioning server 10. The details will be given below on what information is specifically acquired. The cellular communication unit 21 makes the data storage unit 23 store the acquired information.

The cellular communication unit 21 transmits and receives information to and from the positioning server 10 through cellular base station 30 (cellular communication network). The cellular communication unit 21 transmits to the positioning server 10, the information used for positioning in the positioning server 10, which is stored in the data storage unit 23. The information transmitted from the cellular communication unit 21 to the positioning server 10 contains information used for GPS positioning and base station positioning described later, and information used for control of GPS positioning (information about radio communication described below, or information for generation of the information about the radio communication). This transmission is triggered, for example, by a request from the positioning server 10 or by a user's operation on the own terminal 20, on the occasion of carrying out the positioning of the cellular terminal 20.

The GPS receiving unit 22 is a means that receives a signal used in positioning, which is transmitted from a GPS satellite 40. The GPS receiving unit 22 is provided with an antenna for receiving a signal from a GPS satellite and receives the signal using the antenna. The GPS receiving unit 22 makes the data storage unit 23 store information about the received signal from GPS satellite 40, which is used for the operation of GPS positioning. The operation of GPS positioning itself is carried out in the positioning server 10.

The foregoing GPS satellite 40 is located at a certain position according to time and transmits a positioning signal used for positioning, from the current position. Specifically, there are four to five GPS satellites 40 on each of six orbits at the altitude of about 20,000 km and they move on the orbits with time. The positioning signal transmitted from each GPS satellite 40 contains identification information to discriminate the GPS satellite 40 from the others, information to indicate an orbit of the GPS satellite 40, and information to indicate a time of transmission of the signal.

The data storage unit 23 stores the information used in positioning, which was acquired by each of the cellular communication unit 21 and the GPS receiving unit 22. The above described the functional configuration of cellular terminal 20.

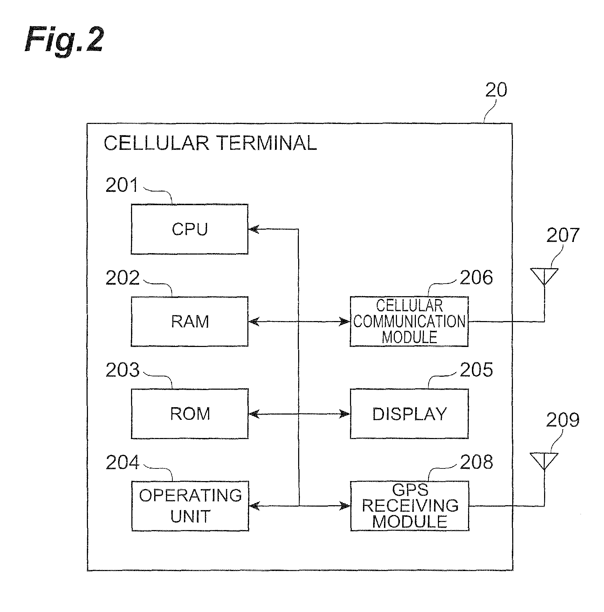

Next, Fig. 2 shows a hardware configuration of cellular terminal 20 according to the present embodiment. As shown in Fig. 2, the cellular terminal 20 is composed of such hardware elements as CPU (Central Processing Unit) 201, RAM (Random Access Memory) 202, ROM (Read Only Memory) 203, operating unit 204, display 205, cellular communication module 206, cellular communication antenna 207, GPS receiving module 208, and GPS receiving antenna 209. The aforementioned functions are fulfilled through operation of these constituent elements. The above described the configuration of cellular terminal 20.

The positioning server 10 will be described below. As shown in Fig. 1, the positioning server 10 is constructed with transceiving unit 11, GPS positioning operation unit 12, base station positioning operation unit 13, radio communication information acquiring unit 14, effectiveness estimating unit 15, estimation database 16, and GPS positioning control unit 17.

The transceiving unit 11 is a means that transmits and receives information to and from cellular terminal 20 through cellular base station 30. The transceiving unit 11 outputs the information received from cellular terminal 20, to the GPS positioning operation unit 12, to the base station positioning operation unit 13, and to the radio communication information acquiring unit 14 depending upon the information.

The GPS positioning operation unit 12 is a means that determines the position of cellular terminal 20 by GPS positioning. Specifically, the GPS positioning operation unit 12 receives the information of the signal received from GPS satellite 40 by the cellular terminal 20, which was transmitted from the cellular terminal 20 to the positioning server 10 (after received by the GPS receiving unit 22 of the cellular terminal 20). Subsequently, the GPS positioning operation unit 12 determines the position of cellular terminal 20 by calculating the position of GPS satellite 40, the distance from cellular terminal 20 to GPS satellite 40, and so on from the information. This calculation may be performed using assist data indicating the position of GPS satellite 40 or the like, which was acquired from the cellular communication system by the cellular terminal 20 and transmitted to the positioning server 10. The GPS positioning operation unit 12 performs the GPS positioning (operation) under control on suitability of execution of the GPS positioning from the GPS positioning control unit 17 as described below. The GPS positioning operation unit 12 outputs the information showing the position of the cellular terminal 20 thus determined, as information of the positioning result, for example, to the cellular terminal 20. If the GPS positioning operation unit 12 fails to determine the position of cellular terminal 20 by GPS positioning, it notifies the base station positioning operation unit 13 of the fact.

The base station positioning operation unit 13 is a means that determines the position of cellular terminal 20 by base station positioning. The base station positioning is, specifically, processing as described below. The base station positioning operation unit 13 receives positioning information for base station positioning, which was transmitted from cellular terminal 20 to positioning server 10. The positioning information for base station positioning is information measured and acquired by the cellular communication unit 21 of cellular terminal 20, e.g., information showing a transmission delay (e.g., RTT: Round Trip Time) of radio waves transmitted and received between cellular terminal 20 and cellular base station 30 or an attenuation of radio waves (or information measured for calculating those pieces of information), and information to specify a cellular base station 30 or a sector (base station ID or sector ID). The base station positioning operation unit 13 determines the position of cellular terminal 20 by calculating the distance between cellular terminal 20 and cellular base station 30, based on the foregoing information such as the transmission delay of radio waves, and referring to the position information of cellular base station 30 or the like. The positioning server 10 herein preliminarily stores the information showing the position of cellular base station 30 and the direction of each sector (this information is not used only by the base station positioning operation unit 13 but is also used by after-described radio communication information acquiring unit 14 and others).

The base station positioning operation unit 13 performs the base station positioning (operation) under control on suitability of execution of the GPS positioning from the GPS positioning control unit 17 as described below. The base station positioning (operation) is also carried out in the case where the base station positioning operation unit 13 is notified of the failure in determining the position of cellular terminal 20 by GAPS positioning, by the GPS positioning operation unit 12. The base station positioning operation unit 13 outputs information showing the determined position of cellular terminal 20 as information of the positioning result, for example, to the cellular terminal 20. Concerning the base station positioning, the positioning processing can be carried out in a relatively short period of time when compared to the GPS positioning.

The radio communication information acquiring unit 14 and effectiveness estimating unit 15 are a means for determining whether the position of cellular terminal 20 is to be determined by GPS positioning. This determination is generally classified in the following two methods: a method of determination based on information showing the accuracy of GPS positioning according to a positioning location; and a method of determination based on the determination result on whether the cellular terminal 20 is located indoors. The functions of radio communication information acquiring unit 14 and effectiveness estimating unit 15 will be explained below for each of the methods. First described is a configuration for the determination based on the information showing the accuracy of GPS positioning according to the positioning location.

The radio communication information acquiring unit 14 is a radio communication information acquiring means that acquires information about radio communication (cellular communication) in the cellular terminal 20. The information about radio communication is information for determining whether the position of cellular terminal 20 is to be determined by GPS positioning.

Specifically, the radio communication information acquiring unit 14 calculates an approximate position of cellular terminal 20 as the information about radio communication, based on a signal from cellular base station 30 received by (cellular communication unit 21 of) cellular terminal 20. For example, it receives from cellular terminal 20, the information to specify a cellular base station 30 or a sector under communication with the cellular terminal 20 and calculates the approximate position of cellular terminal 20 from the information. Specifically, for example, a position where the cellular base station 30 is located, or a center position of the sector is defined as the approximate position of cellular terminal 20. Furthermore, the radio communication information acquiring unit 14 may obtain the approximate position of cellular terminal 20 by carrying out the base station positioning similar to that by the base station positioning operation unit 13. The radio communication information acquiring unit 14 outputs the information of the approximate position of cellular terminal 20 thus calculated, to the effectiveness estimating unit 15. The calculation of the approximate position can be carried out in a relatively short period of time when compared with the aforementioned GPS positioning.

The effectiveness estimating unit 15 is an effectiveness estimating means that estimates effectiveness of GPS positioning, based on the information about radio communication acquired by the radio communication information acquiring unit 14. Specifically, when the information of the approximate position of cellular terminal 20 is input as the information about radio communication from the radio communication information acquiring unit 14, the effectiveness estimating unit 15 estimates the effectiveness of GPS positioning by acquiring information showing the accuracy of GPS positioning with reference to the estimation database 16, using the approximate position as a positioning location.

The estimation database 16 is a database that stores information for estimation of the effectiveness of GPS positioning. Specifically, the estimation database 16 is a positioning accuracy database storing information showing the accuracy of GPS positioning according to positioning location. The accuracy of GPS positioning shows a degree of capability of obtaining a (more accurate) position of cellular terminal 20 by GPS positioning at the foregoing positioning location. The accuracy of GPS positioning becomes higher with increase in a possibility that the cellular terminal 20 can receive a signal from GPS satellite 40 at the foregoing positioning location, a possibility that the position of cellular terminal 20 can be calculated by the positioning operation from the received signal (a quality level of the received signal), and so on.

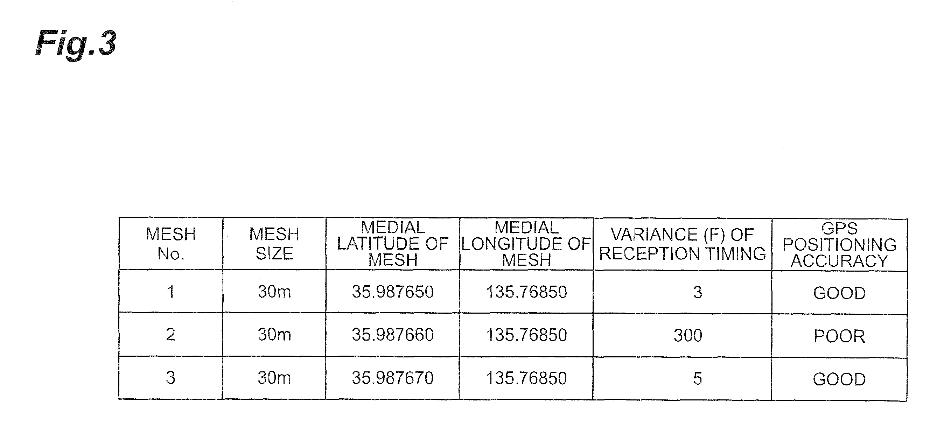

For example, the estimation database 16 stores information showing accuracies of GPS positioning according to respective positioning locations in a table as shown in Fig. 3. In the present embodiment, it holds information representing meshes as mesh places, as the information showing positioning locations. The information representing meshes includes a mesh number specifying each mesh, a mesh size showing a size of each mesh, and a mesh medial latitude and mesh medial longitude showing a location of each mesh. The estimation database 16 holds the information showing the accuracy of GPS positioning, "good" or "poor," corresponding to those pieces of information. A mesh herein is set, for example, in a size of a rectangle with each side of about several m.

The effectiveness estimating unit 15 refers to the estimation database 16 to determine in which mesh the approximate position of cellular terminal 20 falls, and acquires the information of GPS positioning accuracy corresponding to the determined mesh, thereby estimating the effectiveness. Specifically, for example, when the GPS positioning accuracy is determined to be "good," the effectiveness estimating unit 15 estimates that the GPS positioning is effective; when the GPS positioning accuracy is determined to be "poor," the effectiveness estimating unit 15 estimates that the GPS positioning is not effective. The effectiveness estimating unit 15 outputs the information showing the estimated effectiveness of GPS positioning, to the GPS positioning control unit 17.

The following will describe the information showing the accuracy of GPS positioning stored in the estimation database 16. This information can be estimated, for example, by several methods as described below.

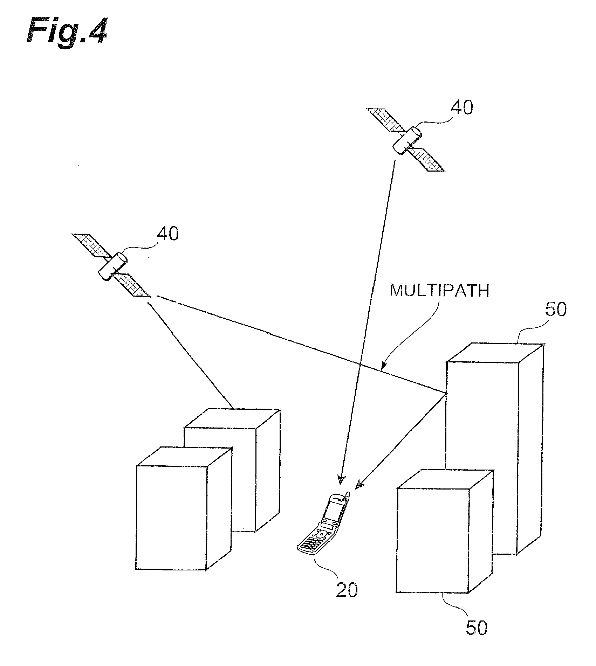

The accuracy can be estimated by simulating reception conditions of radio waves from GPS satellites 40 according to a positioning location, using a building database (GPS positioning accuracy estimation 1). The building database is a database storing information showing positions, shapes, etc. of buildings. As shown in Fig. 4, a reception situation of radio waves by cellular terminal 20 can be simulated in detail by the ray tracing method. The ray tracing is established as a technique of calculating paths in which radio waves radiated from a transmission point (a position of a GPS satellite 40) travel to a reception point (positioning location) in multipath as reflected and diffracted by various buildings 50, using a geometrical technique based on the information of the building database. Since the orbit of a GPS satellite 40 is fixed, a position of the GPS satellite 40 at a certain time can be determined based on the orbit information of the GPS satellite 40. A propagation path length to the reception point is calculated by the ray tracing method for a radio wave transmitted from the position of the GPS satellite 40. When $\Delta d$ stands for a difference between the propagation path length and a direct distance from the GPS satellite 40 to the reception point, the reception timing of the radio wave from the GPS satellite 40 at the reception point must be delayed by $\Delta d$. When the number of GPS satellites 40 whose radio waves can be received at this reception point is n, $\Delta d$ is determined for each of the GPS satellites 40 and a variance thereof is represented by D.

Since a positioning error in GPS positioning is proportional to this variance D, it can be estimated that the accuracy of GPS positioning is poor with large D. Using the above method, D is determined for all points in a service area as a positioning target. Next calculated is an average F (multipath effect index) of D's at reception points in a mesh (F in the estimation database 16 shown in Fig. 3 is this value). Since the accuracy of GPS positioning in the mesh can be regarded as poor with large F, the accuracy of GPS positioning can be determined using a preset threshold k as follows: if F is larger than the threshold k, the accuracy of GPS positioning in the mesh is determined to be "poor"; if F is below k, the accuracy is determined to be "good." The information thus determined is stored as the information showing the GPS positioning accuracy in the estimation database 16.

The information showing the accuracy of GPS positioning can also be determined by calculating a degree of shielding the GPS satellites 40 according to a positioning location, using the building database, and determining the accuracy based on the degree (GPS positioning accuracy estimation 2). On a plain without any building, a range where the sky is seen from a point on the ground, is distributed in a hemisphere because the part below the horizon is screened. If a building is placed on the plain, the building will further shield the view from an observation point. Once one is given the size and position of the building, and the position of the observation point, one can determine a range of azimuthal angles and a range of elevation angles of the shielded part and can specify an angular range from a product of the two ranges. A degree of shielded part at an arbitrary observation point can be calculated using the building database. A ratio of the angular range of the shielded part is calculated relative to the hemisphere and when this ratio is large, the reception accuracy of GPS is determined to be poor because the radio waves from GPS satellites 40 become less likely to be received with increase in this ratio. As in the case of the aforementioned calculation of the reception conditions, an index showing the degree of shielded part (ratio of the angular range of shielded part to the hemisphere) is prepared for each mesh and the accuracy of GPS positioning is determined mesh by mesh. The information thus determined is stored as the information showing the GPS positioning accuracy in the estimation database 16.

The information showing the accuracy of GPS positioning can also be determined based on information showing a type of land according to a positioning location (GPS positioning accuracy estimation 3). The information showing the type of land, specifically, can be information of town structure, e.g., whether a measurement position is located in an urban area, residential area, or suburban area. Information of a correspondence relation between measurement positions and types of land is prepared and the accuracy of GPS positioning according to a measurement position can be determined from a preset correspondence relation between types of land and information showing the accuracy of GPS positioning. For example, the GPS positioning accuracy can be set as follows: since there are many signal-blocking buildings in an urban area, the signals from GPS satellites 40 are less likely to be received there and the GPS accuracy is thus set low; since the number of signal-blocking buildings is small in a suburban area, the signals from GPS satellites 40 are more likely to be received there and the GPS accuracy is thus set high. The accuracy of GPS positioning can be set for each mesh as in the aforementioned cases.

The information showing the accuracy of GPS positioning can also be determined based on information showing the accuracy of GPS positioning obtained by actually measuring it according to a positioning location (GPS positioning accuracy estimation 4). In this method, the cellular terminal 20 is preliminarily made to receive the signals from GPS satellites 40 at each of positioning locations, the GPS positioning is carried out based thereon, and information showing the accuracy of GPS positioning obtained thereby is used. The information is compensated for places without actual measurement, using the actual measurement results.

The information showing the accuracy of GPS positioning can also be determined based on a building coverage or floor-area ratio of land according to a positioning location (GPS positioning accuracy estimation 5). The building coverage is a ratio of building area to ground area and the floor-area ratio is a ratio of total floor area of building to ground area. The building coverage or floor-area ratio is determined from the aforementioned building database. Since buildings are densely built with a high building coverage, the radio waves from GPS satellites 40 are less likely to be received and the positioning accuracy can be estimated as poor. Similarly, since buildings are also densely built with a high floor-area ratio, the radio waves from GPS satellites 40 are less likely to be received, and the positioning accuracy can be estimated as poor. An average of building coverages or floor-area ratios in each mesh as described above is calculated and when the average is over a predetermined threshold, the positioning accuracy in that mesh is determined to be poor.

The information showing the accuracy of GPS positioning by each of the above estimations may be generated in a device other than the positioning server 10 and fed to the positioning server 10, or the positioning server 10 may receive information for generation thereof and generate the accuracy information. In that case, the accuracy information is preliminarily generated before the estimation of effectiveness of GPS positioning by the effectiveness estimating unit 15.

The foregoing information of the approximate position used in the estimation of the effectiveness of GPS positioning was the information showing the specific position (e.g., the position where the cellular base station 30 is located), but it is not always necessary to use the information showing the specific position. For example, any information may be used as long as it is information corresponding to the position such as a cell ID that specifies the cellular base station 30. It is also possible to use position information obtained by a positioning operation similar to that by the base station positioning operation unit 13.

The above-described pieces of information showing the accuracy of GPS positioning each may be independently used, but pieces of a plurality of information showing accuracies may be used in combination to synthetically determine the accuracy of GPS positioning. For example, points are assigned to pieces of respective information showing accuracies and a total of the points may be used to determine the accuracy of GPS positioning. The above described the configuration for determining the effectiveness of GPS positioning based on the information showing the accuracy of GPS positioning according to the positioning location.

The following will describe a configuration in the case where whether the position of cellular terminal 20 is to be determined by the GPS positioning, is determined based on the result of the determination on whether the cellular terminal 20 is located indoors. In this case, the radio communication information acquiring unit 14 determines whether the cellular terminal 20 is located indoors, based on a cellular communication signal received by (cellular communication unit 21 of) cellular terminal 20, and defines the result of the determination as the information about radio communication.

For example, whether the cellular terminal is located indoors or outdoors is determined based on an intensity of a cellular communication signal received from cellular base station 30 by (cellular communication unit 21 of) cellular terminal 20 (indoors/outdoors estimation 1). Specifically, whether the cellular terminal is located indoors or outdoors is determined by consistency of reception levels of radio waves from a plurality of cellular base stations 30 as described below.

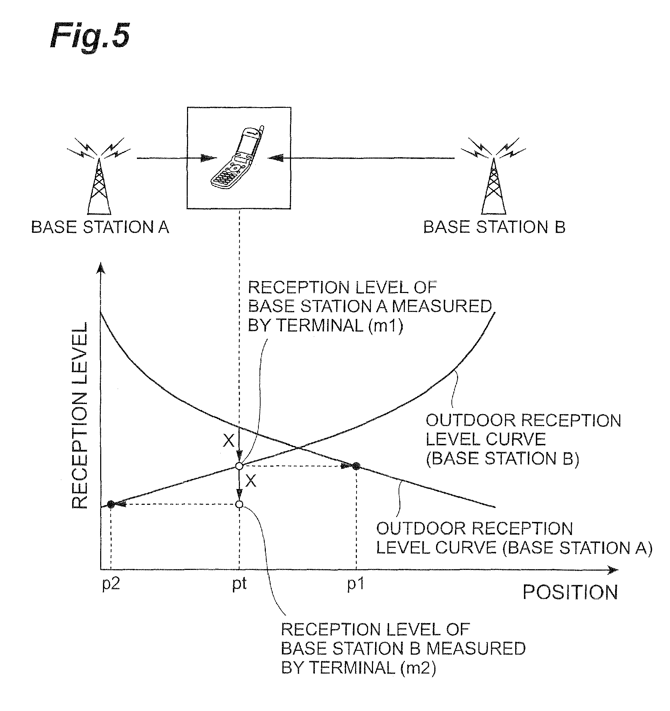

Fig. 5 shows a relation between distances and reception levels from two cellular base stations 30. A radio wave radiated from a cellular base station 30 located outdoors attenuates with distance of propagation and its reception level decreases with increasing distance. The reception level of the radio wave radiated from the cellular base station 30 can be estimated based on the distance from the cellular base station 30 and a characteristic curve (reception level curve) showing a relation between outdoor reception levels and distances from the cellular base station 30, as shown in Fig. 5, can be prepared in advance. It is known that when a radio wave from a cellular base station 30 located outdoors reaches an interior of a building, it is attenuated by building penetration loss X from an outdoor reception level before arrival at the cellular terminal 20. Specifically, when a radio wave penetrates a building, an attenuation of about several tens of dB occurs.

In the case of the example shown in Fig. 5, the cellular terminal 20 is located indoors, and is receiving radio waves from cellular base station A and cellular base station B. In this case, the reception level (m1) of the radio wave from cellular base station A received by the cellular terminal 20 is attenuated by X when compared with the reception level in a situation where it is located outdoors at the same position. Similarly, the reception level (m2) of the radio wave from the base station B is also attenuated by X. Supposing the radio waves at the reception levels of m1 and m2 are received outdoors and the cellular terminal 20 is located on a straight line between cellular base station A and cellular base station B, a position based on the radio wave received from cellular base station A (m1) is p1 and the position based on the radio wave received from cellular base station B (m2) is p2, with reference to the outdoor reception level curves. The cellular terminal 20 simultaneously receives the radio waves from the cellular base station A and cellular base station B; therefore, if the cellular terminal 20 is supposed to be located on the straight line between cellular base station A and cellular base station B, the position estimated from the reception level from cellular base station A will be different from that estimated from the reception level from cellular base station B, causing inconsistency.

Therefore, a difference (distance) between p1 and p2 is calculated and when it is larger than a predetermined threshold T, it can be determined that the foregoing inconsistency is caused. Consequently, the preset building penetration loss X is added to the reception levels and positions based on the respective radio waves are determined using the outdoor reception level curves from the reception results m1, m2 by the cellular terminal 20; then the two positions become position pt, thus providing consistency of information from the two cellular base stations.

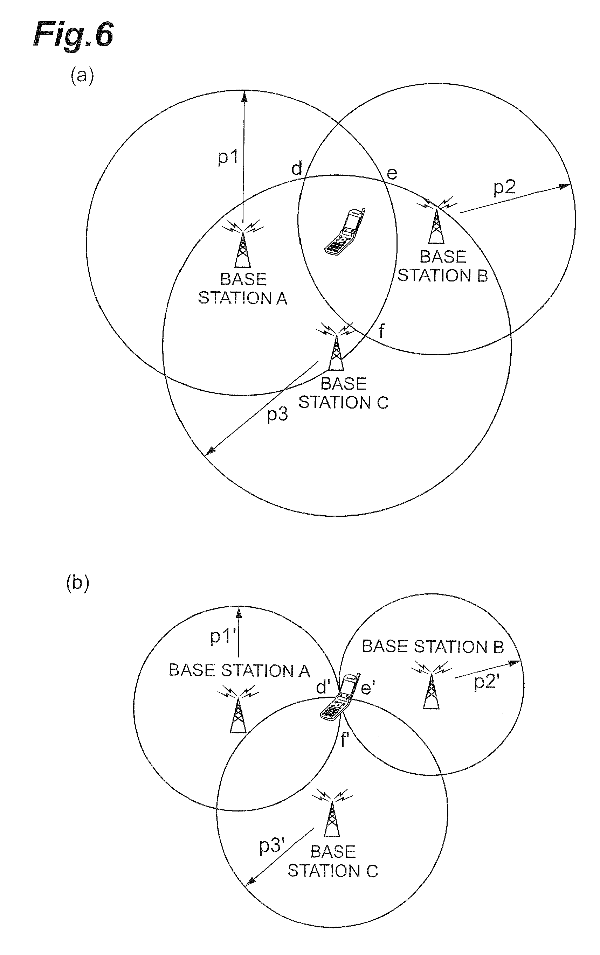

Whether the cellular terminal 20 is located indoors or outdoors is determined using the above-described principle. The above showed the example wherein the cellular terminal 20 was located on the straight line (on a one-dimensional line) between cellular base station A and cellular base station B, but the location of cellular terminal 20 can also be determined in the same manner using three or more cellular base stations 30 in a situation where the cellular terminal 20 is located on a two-dimensional plane. An example of the case where there are three or more cellular base stations 30 will be described below using Fig. 6.

The radio communication information acquiring unit 14 receives from the cellular terminal 20, information to specify cellular base stations A, B, and C from which the cellular terminal 20 received radio waves, and information showing reception levels of the respective radio waves. The radio communication information acquiring unit 14 determines distances p1, p2, and p3 from the respective cellular base stations A, B, and C, from the reception levels of the radio waves, based on reception level curves stored in advance.

As shown in Fig. 6 (a), three circles can be drawn from the coordinates (positions) of the cellular base stations A, B, C, and the distances p1, p2, p3 and intersections d, e, and f of these three circles can be geometrically uniquely determined. The radio communication information acquiring unit 14 preliminarily stores the information of coordinates of each cellular base station 30 utilizing the geographic information system database (GIS database) or the like and calculates the foregoing intersections using it.

If the intersections d, e, f are distant from each other, inconsistency is caused as described above in the one-dimensional case and, therefore, the radio communication information acquiring unit 14 calculates the sum of distances between the three points d, e, f and determines whether the sum is larger than a threshold S as represented by the formula below. If the sum is larger than the threshold S, it is recognized that there is inconsistency.

$$|d - e| + |d - f| + |e - f| > S$$

In this case, the radio communication information acquiring unit 14 performs correction for the reception levels using the preset building penetration loss X and again obtains distances p1', p2', and p3' from the reception level curves. Thereafter, as shown in Fig. 6 (b), it determines intersections d', e', and f of three circles determined from the distances p1', p2', and p3' with their centers at the positions of the cellular base stations A, B, and C, and calculates the sum of distances between the intersections d', e', f. It is then determined whether this sum value is smaller than a threshold U as represented by the formula below, and if the sum is smaller than the threshold U, this cellular terminal 20 is determined to be located indoors.

$$|d' - e'| + |d' - f'| + |e' - f'| < U$$

The simple reception level curves were used herein, but more complicated reception level curves can be obtained by an advanced propagation estimation technique such as the ray tracing method, enabling similar determination using the thus obtained curves. In this case, the reception level curves also become complicated, and the reception levels do not always show a monotonic decrease tendency against distance; therefore, it is considered that a plurality of distances are determined for one reception level. In this case, whether the cellular terminal is located indoors is determined by a pattern matching method.

In the pattern matching method, when a plurality of distances are determined, the aforementioned determination process is carried out for all combinations and when there is a combination satisfying the foregoing two conditions (conditions using the thresholds S and U) among these combinations, the cellular terminal 20 is determined to be located indoors. When the above conditions are not satisfied, the determination cannot be made.

Whether the cellular terminal is located indoors or outdoors may be determined based on information contained in a cellular communication signal received from a cellular base station 30 by (cellular communication unit 21 of) cellular terminal 20 (indoors/outdoors estimation 2).

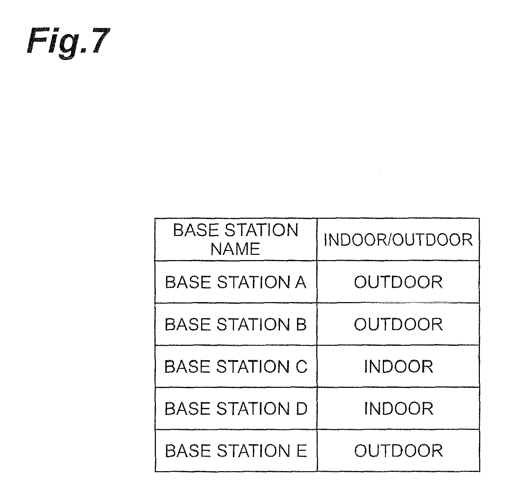

Specifically, for example, whether the cellular terminal is located indoors or outdoors is determined based on the information to specify the cellular base station 30 (own device), which is contained in broadcast information received from the cellular base station 30 (i.e., this cellular base station 30 is a device that is under radio communication with the cellular terminal 20). In that case, the positioning server 10 is so configured that in the estimation database 16 or the like information showing whether each cellular base station 30 is located indoors or outdoors is held corresponding to the information to specify the cellular base station 30 (base station name), as shown in Fig. 7. This information is preliminarily input by an administrator of the positioning server 10 or the like.

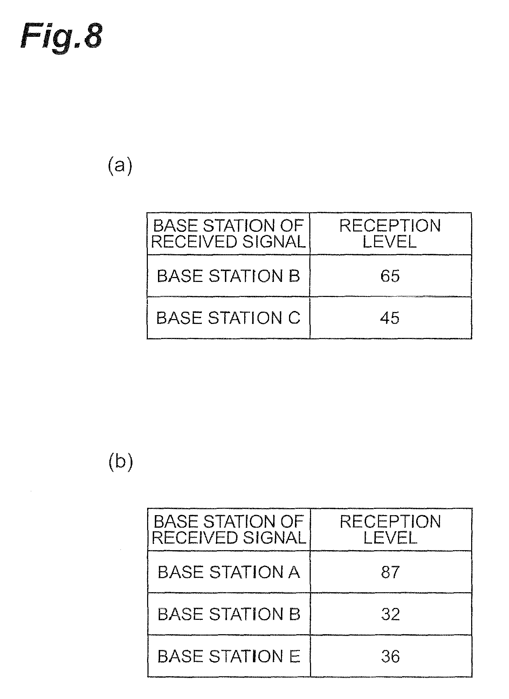

The radio communication information acquiring unit 14 receives the information showing the correspondence between cellular base station names contained in the broadcast information received by the cellular terminal 20 and reception levels upon reception of the broadcast information as shown in Fig. 8, through the transceiving unit 11 from the cellular terminal 20. It is indicated in the example shown in Fig. 8(a) that the cellular terminal 20 received the signal from base station B at the reception level of 65 and the signal from base station C at the reception level of 45.

Subsequently, based on the information received from the cellular terminal 20, the radio communication information acquiring unit 14 determines whether each of the cellular base stations 30 from which the cellular terminal 20 received the signal, is located indoors or outdoors, with reference to the aforementioned information on whether each cellular base station 30 is located indoors or outdoors. Based on the determination, the radio communication information acquiring unit 14 determines whether the cellular terminal 20 is located indoors or outdoors. Specifically, when it is determined that any one of the cellular base stations 30 from which the cellular terminal 20 received the signal is located indoors, the cellular terminal 20 is determined to be located indoors. In a case where the information on whether each cellular base station 30 is located indoors or outdoors is that in the example shown in Fig. 7 and where the information received from the cellular terminal 20 is that in the example shown in Fig. 8 (a), the base station C is an indoor cellular base station 30 and it is thus determined that the cellular terminal 20 is located indoors. In a case where the information received from the cellular terminal 20 is that in the example shown in Fig. 8 (b), there is no indoor cellular base station 30 and thus the cellular terminal 20 is determined to be located outdoors.

The above-described determination may be made using only cellular base stations 30 whose reception level is not less than a preset threshold, in the information received from the cellular terminal 20.

The above-described method involved the determination on indoors/outdoors using the information to specify the cellular base station 30, but the determination may be made using any information associated with the information showing whether indoors or outdoors. In that case, the information does not always have to be information acquired through cellular communication, but may be any information received through any radio communication by the cellular terminal 20.

For example, the location may be determined using information to specify a wireless tag such as an RFID (Radio Frequency IDentification) tag (indoors/outdoors estimation 3). In that case, the cellular terminal 20 has a function to read the information of the wireless tag by (short-range) radio communication, and reads the information to specify the wireless tag (e.g., a tag name), from the wireless tag. There are wireless tags set at various locations in a service area as a positioning target and the cellular terminal 20 can read the information to specify the wireless tag, from each wireless tag according to the location of the cellular terminal itself.

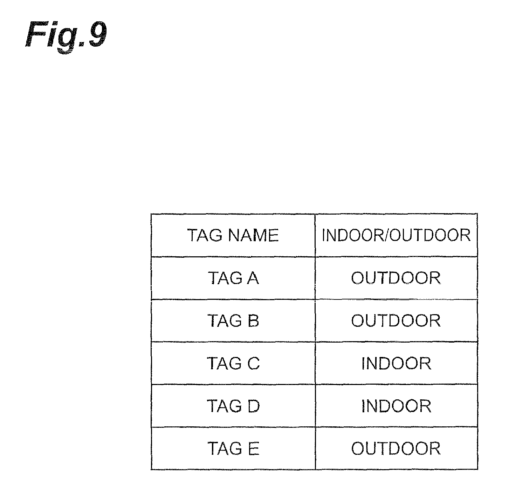

On the other hand, the positioning server 10 is so configured that in the estimation database 16 or the like information showing whether each wireless tag is provided indoors or outdoors is held corresponding to the information to specify the wireless tag (tag name), as shown in Fig. 9. This information is preliminarily input by the administrator of positioning server 10 or the like.

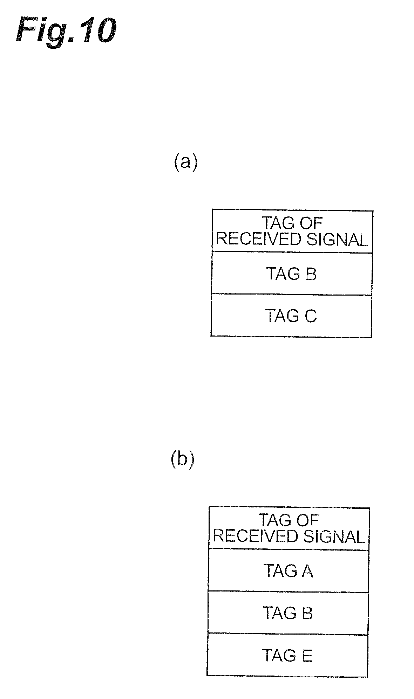

The radio communication information acquiring unit 14 receives tag names read from wireless tags by the cellular terminal 20 as shown in Fig .10, through the transceiving unit 11 from the cellular terminal 20. In the example shown in Fig. 10 (a), it is indicated that the cellular terminal 20 read the tag names from the wireless tags of tag B and tag C.

Subsequently, based on the information received from the cellular terminal 20, the radio communication information acquiring unit 14 determines whether each of the wireless tags whose tag name was read by the cellular terminal 20 is located indoors or outdoors, with reference to the aforementioned information showing whether each wireless tag is located indoors or outdoors. The radio communication information acquiring unit 14 determines whether the cellular terminal 20 is located indoors or outdoors, based on the determination. Specifically, when any one of the wireless tags whose tag name was read by the cellular terminal 20 is located indoors, the cellular terminal 20 is determined to be located indoors. In a case where the information showing whether each wireless tag is provided indoors or outdoors is that in the example shown in Fig. 9 and where the information received from the cellular terminal 20 is that in the example shown in Fig. 10 (a), tag C is an indoor tag and the cellular terminal 20 is thus determined to be located indoors. In a case where the information received from the cellular terminal 20 is that in the example shown in Fig. 10 (b), there is no indoor wireless tag and the cellular terminal 20 is thus determined to be located outdoors. The above described the example of RFID tags, but the determination on indoors/outdoors may be made using information read through other short-range radio communication (e.g., Bluetooth).

Whether indoors or outdoors may also be determined using information to specify an access point of a wireless LAN (Local Area Network) (indoors/outdoors estimation 4). In that case, the cellular terminal 20 has a function to be connected to a wireless LAN and to perform communication therewith. The cellular terminal 20 acquires the information to specify an access point of a wireless LAN under radio communication (e.g., a MAC address). There are access points of wireless LAN at various locations in a service area as a positioning target, and the cellular terminal 20 performs radio communication with access points according to its own position.

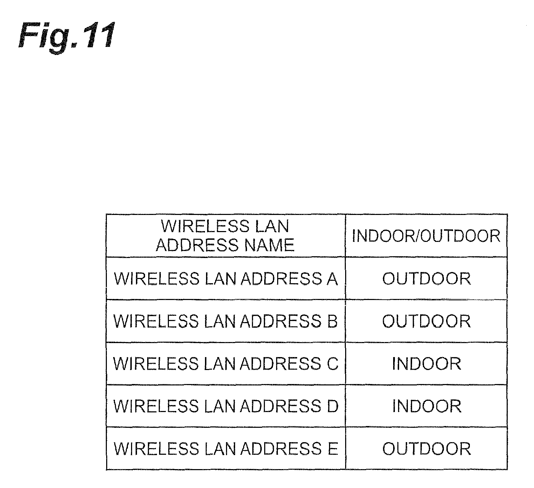

On the other hand, the positioning server 10 is so configured that in the estimation database 16 or the like information showing whether each access point is located indoors or outdoors is held corresponding to the aforementioned information to specify the access point (wireless LAN address name), as shown in Fig. 11. This information is preliminarily input by the administrator of positioning server 10 or the like.

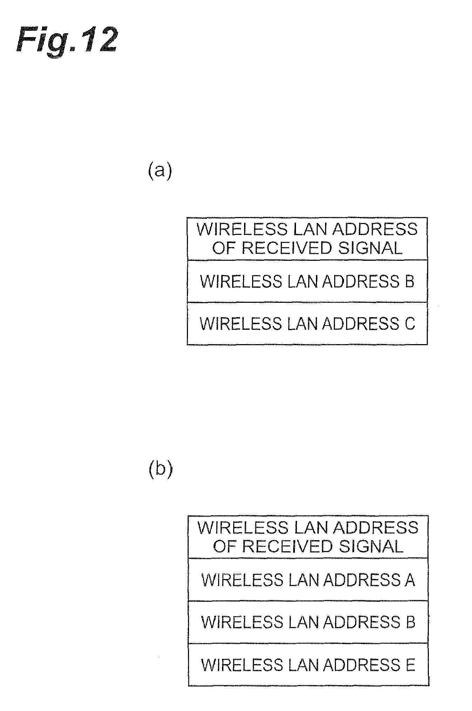

The radio communication information acquiring unit 14 receives wireless LAN address names acquired from access points by the cellular terminal 20 as shown in Fig. 12, through the transcciving unit 11 from the cellular terminal 20. In the example shown in Fig. 12 (a), it is indicated that the cellular terminal 20 acquired the wireless LAN address names from access points of wireless LAN address B and wireless LAN address C.

Subsequently, based on the information received from the cellular terminal 20, the radio communication information acquiring unit 14 determines whether each access point whose wireless LAN address name was read by the cellular terminal 20 is located indoors or outdoors, with reference to the aforementioned information showing whether each access point is located indoors or outdoors. The radio communication information acquiring unit 14 determines whether the cellular terminal 20 is located indoors or outdoors, based on the determination. Specifically, when any one of the access points whose wireless LAN address name was acquired by the cellular terminal 20 is located indoors, the cellular terminal 20 is determined to be located indoors. In a case where the information showing whether each access point is located indoors or outdoors is that in the example shown in Fig. 11 and where the information received by the cellular terminal 20 is that in the example shown in Fig. 12 (a), the access point of wireless LAN address C is located indoors and the cellular terminal 20 is determined to be located indoors. In a case where the information received by the cellular terminal 20 is that in the example shown in Fig. 12 (b), there is no indoor access point and the cellular terminal 20 is determined to be located outdoors.

The above described the determination on whether the cellular terminal 20 is located indoors or outdoors, which is carried out by the radio communication information acquiring unit 14. The radio communication information acquiring unit 14 outputs the information showing the determination on whether the cellular terminal 20 is located indoors or outdoors, as the information about radio communication to the effectiveness estimating unit 15. Concerning the determination on whether the cellular terminal 20 is located indoors or outdoors, processing can be carried out in a relatively short period of time when compared with the aforementioned GPS positioning and base station positioning. The information of the determination results on whether the cellular terminal 20 is located indoors or outdoors each may be independently used, but pieces of information may be used in combination to synthetically determine whether the cellular terminal 20 is located indoors or outdoors. For example, points may be assigned to pieces of information showing the respective determinations on indoors/outdoors and when a total of the points is larger than a predetermined threshold, the cellular terminal 20 is determined to be located indoors.

When the effectiveness estimating unit 15 receives the information showing whether the cellular terminal 20 is located indoors or outdoors, as the information about radio communication from the radio communication information acquiring unit 14, it estimates the effectiveness of GPS positioning based on the information. For example, when the cellular terminal 20 is determined to be located outdoors, it is estimated that the GPS positioning is effective; when the cellular terminal 20 is determined to be located indoors, it is estimated that the GPS positioning is not effective. The reason for it is that when the cellular terminal 20 is not located outdoors, it cannot receive the radio waves from GPS satellites 40 and thus positioning is impossible. The effectiveness estimating unit 15 outputs the information showing the effectiveness of GPS positioning thus estimated, to the GPS positioning control unit 17. The above described the configuration for determining the effectiveness of GPS positioning, based on the result of the determination on whether the cellular terminal 20 is located indoors.

The GPS positioning control unit 17 is a GPS positioning control means that controls execution of the GPS positioning of the cellular terminal 20, based on the effectiveness estimated by the effectiveness estimating unit 15. Specifically, when the GPS positioning is determined to be effective, the GPS positioning control unit 17 controls the GPS positioning operation unit 12 to execute the GPS positioning. On the other hand, when the GPS positioning is determined not to be effective, the GPS positioning control unit 17 controls the base station positioning operation unit 13 to execute the base station positioning (while not instructing the GPS positioning operation unit 12 to execute the GPS positioning, or while inhibiting it from executing the GPS positioning). The above described the functional configuration of the positioning server 10.

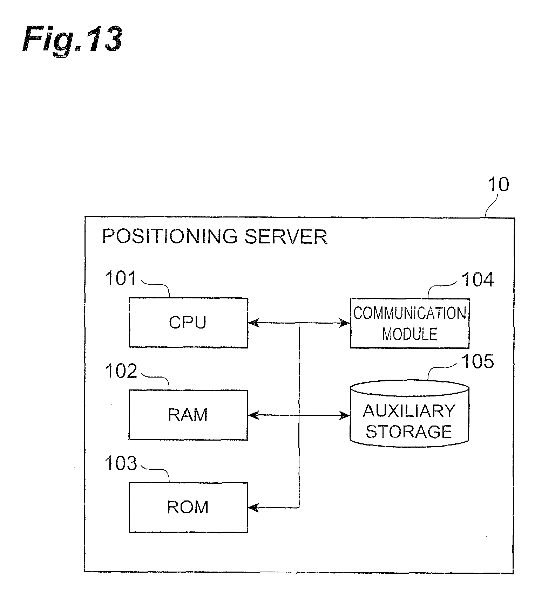

Fig. 13 shows a hardware configuration of the positioning server 10. As shown in Fig. 13, the positioning server 10 is constructed as one including a computer with such hardware as CPU 101, RAM 102 and ROM 103 as main storage devices, communication module 104 for communication, and auxiliary storage device 105 like a hard disk. As these constituent elements operate according to a program or the like, the aforementioned functions of the positioning server 10 are fulfilled.

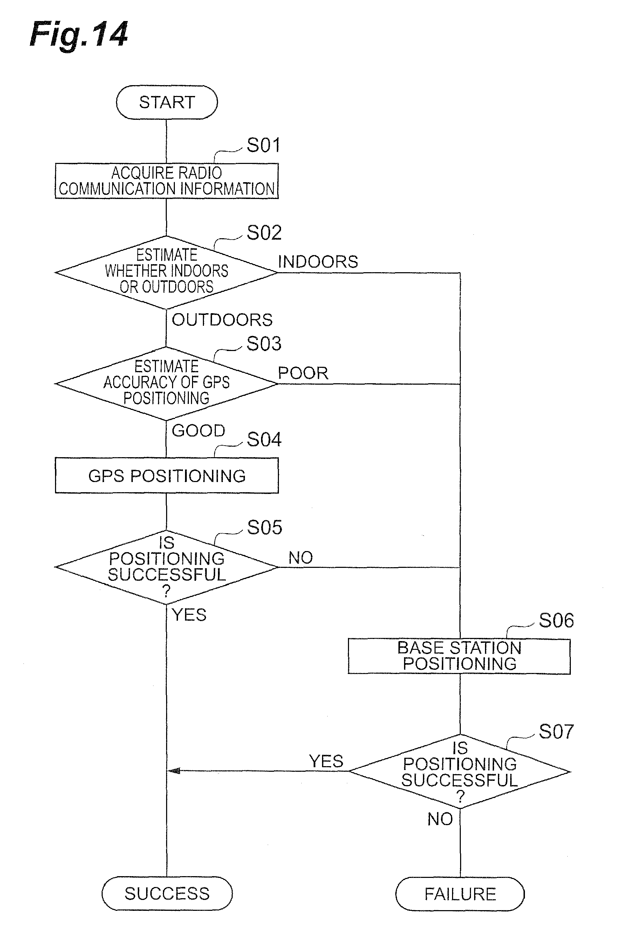

The following will describe the positioning processing (positioning method) executed by the positioning server 10 according to the present embodiment, using the flowchart of Fig. 14. This processing is initiated, for example, when the positioning server 10 receives a positioning request through the cellular communication network from cellular terminal 20. The positioning processing may be initiated by any trigger other than the above.

The first step is to send the information of communication by the cellular communication unit 21, which was acquired in the cellular terminal 20, to the positioning server 10. This information concerns the aforementioned information about radio communication. In the positioning server 10, the radio communication information acquiring unit 14 receives the information through the transceiving unit 11. Based on the received information, the radio communication information acquiring unit 14 acquires the information about radio communication (S01, radio communication information acquiring step). The information about radio communication is, as described above, the information showing the approximate position of cellular terminal 20, and the determination information on whether the cellular terminal 20 is located indoors. The information about radio communication thus acquired is output from the radio communication information acquiring unit 14 to the effectiveness estimating unit 15.

Next, the effectiveness estimating unit 15 estimates the effectiveness of GPS positioning from the determination information on whether the cellular terminal 20 is located indoors (S02, effectiveness estimating step). When the above step results in estimating that the GPS positioning is effective, i.e., when it is determined that the cellular terminal 20 is located outdoors, the effectiveness estimating unit 15 then refers to the estimation database 16 to acquire the information showing the accuracy of GPS positioning according to the information showing the approximate position of cellular terminal 20, and estimates the effectiveness of GPS positioning on the basis thereof (S03, effectiveness estimating step). When the above step results in estimating that the GPS positioning is effective, i.e., when the accuracy of GPS positioning is estimated to be good, the estimation result is fed from the effectiveness estimating unit 15 to the GPS positioning control unit 17.

When the GPS positioning control unit 17 receives the estimation result that the GPS positioning is effective, the GPS positioning control unit 17 controls the GPS positioning operation unit 12 to execute the GPS positioning of cellular terminal 20. Then the GPS positioning operation unit 12 thus controlled then performs the GPS positioning operation (S04, GPS positioning control step). The information about reception of positioning signals from GPS satellites 40 by cellular terminal 20, for execution of the GPS positioning operation, may be acquired based on a request from the positioning server 10 to the cellular terminal 20 at this point of time, or may have been transmitted from the cellular terminal 20 before this point of time.

When the GPS positioning operation unit 12 successfully performs the GPS positioning operation (S05), the GPS positioning operation unit 12 outputs the information showing the determined position of cellular terminal 20 as information of the positioning result, for example, to the cellular terminal 20, thereby ending the positioning processing.

When it is estimated in either one of S02 and S03 that the GPS positioning is not effective, i.e., when it is determined that the cellular terminal 20 is located indoors or when the accuracy of GPS positioning is estimated to be poor, the result is fed from the effectiveness estimating unit 15 to the GPS positioning control unit 17. When the GPS positioning control unit 17 receives the result that the GPS positioning is not effective, the GPS positioning control unit 17 controls the base station positioning operation unit 13 to execute the base station positioning of cellular terminal 20 (without controlling the GPS positioning operation unit 12 to perform the positioning operation). Subsequently, the base station positioning operation unit 13 thus controlled performs the base station positioning operation (S06, GPS positioning control step). When the GPS positioning operation by the GPS positioning operation unit 12 is unsuccessful (S05), the base station positioning operation unit 13 also performs the base station positioning operation (S06).

The information about transmission/reception of signals between cellular terminal 20 and cellular base station 30, for execution of the base station positioning operation, may be acquired based on a request from the positioning server 10 to the cellular terminal 20 at this point of time, or may have been transmitted from the cellular terminal 20 before this point of time. In the case where the same operation processing as that by the base station positioning operation unit 13 has already been performed to calculate the approximate position on the occasion of estimating the effectiveness of GPS positioning as described above, the information showing the approximate position may be used as the information of the positioning result, without always having to perform the positioning operation by the base station positioning operation unit 13 at this point.

When the base station positioning operation unit 13 successfully performs the base station positioning operation (S07), the base station positioning operation unit 13 outputs the information showing the determined position of cellular terminal 20 as the information of the positioning result, for example, to the cellular terminal 20, thereby ending the positioning processing. When the base station positioning operation unit 13 fails in the base station positioning operation (S07), it outputs the fact of the failure in the positioning processing as the information of the positioning result, for example, to the cellular terminal 20, thereby ending the positioning processing.

The above described the positioning processing executed in the positioning server 10 according to the present embodiment. The operations of estimating the effectiveness of GPS positioning in S02 and S03 do not always have to be carried out together, but it is sufficient to carry out at least one of them.

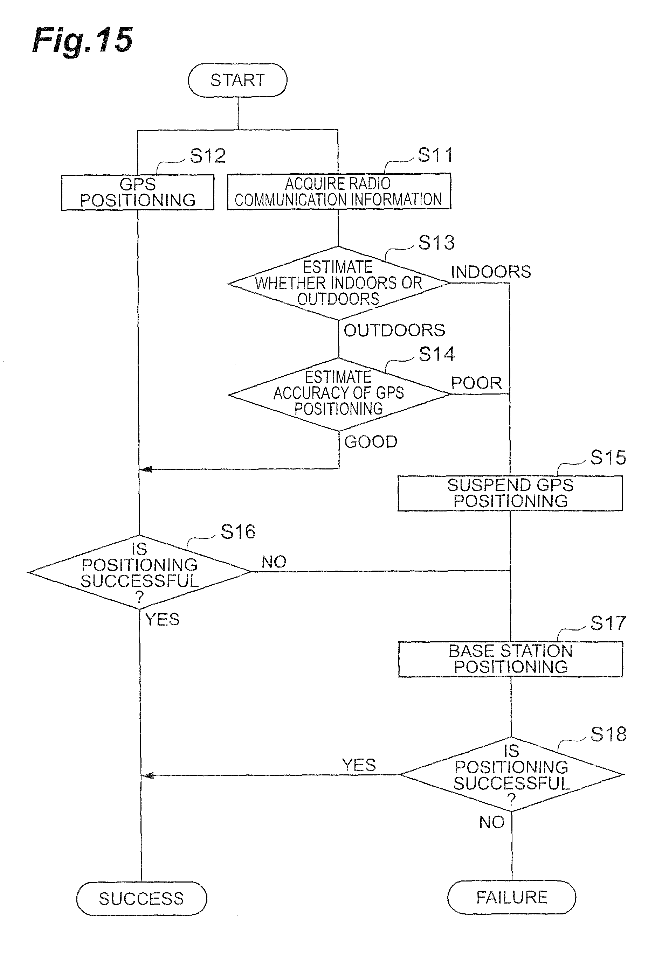

The below will describe another example of the positioning processing (positioning method) executed in the positioning server 10 according to the present embodiment, using the flowchart of Fig. 15. The above-described example showed the GPS positioning operation carried out after the GPS positioning was estimated to be effective, but the present example shows a configuration wherein the GPS positioning is initiated at a start point of the processing in the positioning server 10.

In the positioning server 10, the radio communication information acquiring unit 14 acquires the information about radio communication as in the case of the aforementioned processing (S11, radio communication information acquiring step). The radio communication information acquiring unit 14 outputs the information about radio communication thus acquired, to the effectiveness estimating unit 15. On the other hand, the GPS positioning operation unit 12 starts the GPS positioning operation (S12).

Subsequently, the effectiveness estimating unit 15, receiving the information about radio communication, estimates the effectiveness of GPS positioning from the determination information on whether the cellular terminal 20 is located indoors (S13, effectiveness estimating step). When the above step results in estimating that the GPS positioning is effective, i.e., when it is determined that the cellular terminal 20 is located outdoors, the effectiveness estimating unit 15 then refers to the estimation database 16 to acquire the information showing the accuracy of GPS positioning according to the information showing the approximate position of the cellular terminal 20, and estimates the effectiveness of GPS positioning on the basis thereof (S 14, effectiveness estimating step). When the above step results in estimating that the GPS positioning is effective, i.e., when the accuracy of GPS positioning is estimated to be good, the estimation result is fed from the effectiveness estimating unit 15 to the GPS positioning control unit 17. In that case, the GPS positioning control unit 17 performs no extra control on the GPS positioning operation unit 12, which leads the GPS positioning operation unit 12 to continue the operation processing of GPS positioning.

When either one of S13 and S14 results in estimating that the GPS positioning is not effective, i.e., when it is determined that the cellular terminal 20 is located indoors or when the accuracy of GPS positioning is estimated to be poor, the result is fed from the effectiveness estimating unit 15 to the GPS positioning control unit 17. When the GPS positioning control unit 17 receives the result that the GPS positioning is not effective, the GPS positioning control unit 17 controls the GPS positioning operation unit 12 to suspend the GPS positioning operation. The GPS positioning operation unit 12 thus controlled suspends the GPS operation processing (S15, GPS positioning control step).

When the GPS positioning operation unit 12 successfully performs the GPS positioning operation without control to suspend the GPS positioning (S16), the GPS positioning operation unit 12 outputs the information showing the determined position of cellular terminal 20 as the information of the positioning result, for example, to the cellular terminal 20, thereby ending the positioning processing.

When the control to suspend the GPS positioning operation is carried out, the GPS positioning control unit 17 also controls the base station positioning operation unit 13 to execute the base station positioning of cellular terminal 20. Then the base station positioning operation unit 13 thus controlled performs the base station positioning operation (S17, GPS positioning control step). When the GPS positioning operation unit 12 fails in the GPS positioning operation (S16), the base station positioning operation unit 13 also performs the base station positioning operation (S 17).

When the base station positioning operation unit 13 successfully performs the base station positioning operation (S18), the base station positioning operation unit 13 outputs the information showing the determined position of the cellular terminal 20 as the information of the positioning result, for example, to the cellular terminal 20, thereby ending the positioning processing. When the base station positioning operation unit 13 fails in the base station positioning operation (S18), it outputs the fact of the failure in the positioning processing as the information of the positioning result, for example, to the cellular terminal, 20, thereby ending the positioning processing. The above described the other example of the positioning processing executed by the positioning server 10 according to the present embodiment.

As described above, the positioning server 10 according to the present embodiment is configured to acquire the information about radio communication by cellular communication unit 21 according to a condition, e.g., the position of cellular terminal 20. Subsequently, the effectiveness of GPS positioning is estimated based on the acquired information, and execution of the GPS positioning in the receiver is controlled based on the effectiveness. Therefore, the positioning server 10 is able to perform such control that when the cellular terminal 20 is in a condition in which it is easy to perform the GPS positioning, the GPS positioning is executed and that when the cellular terminal 20 is in a condition in which it is not easy to perform the GPS positioning, the GPS positioning is not executed. The positioning server 10 is able to perform the control on suitability of execution of the GPS positioning, without actually carrying out the GPS positioning which requires some time for the determination on suitability of execution. Namely, the positioning server 10 of the present embodiment is able to obtain the positioning result according to a condition of the cellular terminal 20 in a shorter period of time, by avoiding the GPS positioning if the cellular terminal 20 is in a condition in which the GPS positioning is ineffective. In that case, the reception of signals for GPS positioning is avoided or the time therefor is reduced, thereby reducing power consumption in the cellular terminal 20.

When the GPS positioning is not carried out, it is preferable to perform the control to execute the base station positioning of the cellular terminal 20 as in the present embodiment. This configuration permits us to obtain the positioning result of the positioning server 10 even if the GPS positioning is not carried out. Namely, based on the information about radio communication, an appropriate positioning method is selected according to a condition such as the position of cellular terminal 20 to execute the positioning processing, as described above.

A table below shows the features of the GPS positioning (particularly, AGPS positioning) and the base station positioning (including Hybrid) according to conditions of the cellular communication unit 21.

[Table 1]

| | | Urban area | Suburban area |
|---|---|---|---|
| AGPS positioning | outdoors | positioning is possible but a large error can be caused by effect of multipath (in the range of about several tens of meter to 100 m) | good positioning accuracy (about 10 m) |
| | indoors | positioning is impossible because no radio wave is received from GPS satellites | positioning is impossible because no radio wave is received from GPS satellites |
| Base station positioning (including Hybrid) | outdoors | positioning accuracy is relatively good because cell density is high (in general the accuracy is poorer than that by GPS) | positioning accuracy is poor because cell density is low |
| | indoors | indoor positioning accuracy is equivalent to outdoor positioning accuracy | indoor positioning accuracy is equivalent to outdoor positioning accuracy |

As shown in the above table, when the cellular terminal 20 is located indoors, no radio wave is received from GPS satellites 40 and thus the positioning is impossible; therefore, it is preferable to perform the base station positioning. When the cellular terminal 20 is located outdoors, the GPS positioning can demonstrate better positioning accuracy in a suburban area, and it is thus preferable to perform the GPS positioning in that case.

Therefore, as in the positioning server 10 of the present embodiment, it is preferable to calculate the approximate position of the cellular terminal 20 and estimate the effectiveness of GPS positioning on the basis thereof. This configuration permits the positioning server 10 to perform the control on suitability of execution of the GPS positioning, based on the accuracy of GPS positioning according to the positioning location, thereby enabling more appropriate implementation of the present invention. As in the positioning server 10 of the present embodiment, it is preferable to perform the determination on whether the cellular terminal 20 is located indoors or outdoors and estimate the effectiveness of GPS positioning on the basis thereof.

In the present embodiment, as described above, the entity to perform the positioning operation was the positioning server 10, but the entity to perform the positioning operation may be the cellular terminal 20. Namely, in that case, the cellular terminal 20 may be configured to be equipped with all the functions of the present invention. In that case, the information necessary for the determination and others is preliminarily transmitted to the cellular terminal 20. Furthermore, all the functions may be provided in an IC chip which the cellular terminal, 20 has. The cellular terminal 20 may also be configured to be equipped with some of the aforementioned functions. For example, the cellular terminal 20 may be configured to perform the calculation of the approximate position of cellular terminal 20 and the determination on whether indoors or outdoors. The cellular terminal 20 may have the GPS positioning operation function (the function of GPS positioning operation unit 12).

As described above, the cellular terminal 20 as a positioning target does not always have to be one capable of carrying out cellular communication, but may be one capable of performing radio communication. Specifically, for example, the cellular terminal 20 can be one capable of reading information from RFID tags, or one capable of performing communication with wireless LANs as described above.

The determinations for the control of GPS positioning can also be performed as described below, in addition to the aforementioned methods. For example, the above described the method of determining whether the cellular terminal 20 is located indoors, from the intensity of the signal of cellular communication received from cellular base station 30 by (cellular communication unit 21 of) cellular terminal 20, but the determination may be performed as described below, in addition to the above-described methods.

The radio communication information acquiring unit 14 receives information showing a reception level of a radio wave (intensity of the signal) received by the cellular terminal 20, from the cellular terminal 20. Here the information showing the reception level of the radio wave received by the cellular terminal 20 may be plural pieces of information according to respective cellular base stations 30 (i.e., the radio communication information acquiring unit 14 may receive information showing reception levels of radio waves from a plurality of cellular base stations 30). The radio communication information acquiring unit 14 determines whether any one of the reception levels of outdoor cellular base stations 30 exceeds a threshold stored in advance. When it is determined that there is a reception level exceeding the threshold, the radio communication information acquiring unit 14 determines that the cellular terminal 20 is located outdoors (with a high possibility). This is based on the assumption that when a cellular base station 30 is located outdoors like the cellular base stations installed by telecommunications carriers, a radio wave from the cellular base station 30 arriving indoors is considered to be attenuated to below a certain reception level.

Furthermore, the radio communication information acquiring unit 14 determines whether the reception levels are wholly lowered. For example, the radio communication information acquiring unit 14 calculates an average of the foregoing reception levels and determines whether the average exceeds a threshold preliminarily stored. When it is determined that the average exceeds the threshold, the radio communication information acquiring unit 14 determines that the cellular terminal 20 is located outdoors (with a high possibility). The radio communication information acquiring unit 14 calculates the aforementioned variance of (the plurality of) reception levels and determines whether the variance exceeds a threshold stored in advance. When it is determined that the variance exceeds the threshold, the radio communication information acquiring unit 14 determines that the cellular terminal 20 is located outdoors (with a high possibility). These are also based on the assumption that when a cellular base station 30 is located outdoors, a radio wave from the cellular base station 30 arriving indoors is considered to be uniformly attenuated to below a certain reception level (there is no radio wave demonstrating an extremely high reception level without being attenuated).

The determination on whether the cellular terminal 20 is located indoors, by the radio communication information acquiring unit 14 may be carried out based on a temporal change in intensity of a signal, from the intensity of the radio wave from cellular base station 30 received by (cellular communication unit 21 of) cellular terminal 20 over a plurality of periods of time. For example, when the intensity of the received signal becomes lowered, the cellular terminal 20 is determined to be located indoors. This determination is based on the fact that as the cellular terminal 20 migrates from outdoors to indoors, a radio wave received by the cellular terminal 20 becomes attenuated and the reception level thereof becomes significantly reduced.

Specifically, first, the radio communication information acquiring unit 14 receives information showing a plurality of reception levels of radio waves (intensities of signals) received by cellular terminal 20, from the cellular terminal 20. The cellular communication unit 21 of cellular terminal 20 receives a signal at fixed intervals (e.g., intervals of several seconds) from a cellular base station 30 and transmits information showing the reception level thereof to the positioning server 10. The radio communication information acquiring unit 14 receives the foregoing information, i.e., the information showing the time-series reception levels (time-series data).

The radio communication information acquiring unit 14 calculates a movement average C of data of m (m is an integer of not less than 1) successive reception levels including the current (latest) data, from the data of time-series reception levels. Furthermore, it calculates a movement average Pk of data of m consecutive reception levels received at a point k (k is an integer of not less than 1) before the current measurement value. Next, the radio communication information acquiring unit 14 determines whether Pk - C > Z is satisfied, using a threshold Z stored in advance. When it is determined that Pk - C > Z is satisfied, the radio communication information acquiring unit 14 determines that the current reception level of the cellular terminal 20 is lowered relative to the past reception level, and then determines that the cellular terminal 20 is located indoors. For performing the above determination, the radio communication information acquiring unit 14 needs to store (m+k) pieces of data before the latest data as the data of reception levels of the cellular terminal 20.

The aforementioned method of determining whether indoors or outdoors from the reception levels in the cellular terminal 20 does not always have to use the radio waves from cellular base station 30. For example, the determination may be made based on reception levels of television or radio broadcast signals. In that case, the cellular terminal 20 has a function to receive the broadcast signals, and is configured to receive the broadcast signals at fixed intervals (e.g., intervals of several seconds) and transmit information indicating reception levels thereof, to the positioning server 10. The subsequent determination operation is the same as in the case of radio waves from cellular base station 30.

The determination on whether the cellular terminal 20 is located indoors, by the radio communication information acquiring unit 14 may be carried out based on an originating source of radio communication waves received by (cellular communication unit 21 of) cellular terminal 20. This method can be applied, for example, to a case where the cellular terminal 20 has the DHO (Diversity HandOver) function.

The cellular communication unit 21 of the cellular terminal 20 transmits information showing a changeover history of DHO to the positioning server 10 upon or before carrying out the foregoing determination. The radio communication information acquiring unit 14 receives the information and determines whether changeover of DHO is frequently caused, from the information. When the radio communication information acquiring unit 14 determines that changeover is frequently caused, it determines that the cellular terminal 20 is located outdoors (with a high possibility), because the cellular terminal 20 is very likely to migrate. Namely, the determination on whether the cellular terminal 20 is located indoors or outdoors is made based on whether cellular base stations 30 as originating sources of radio waves are frequently changed over for radio communication with the cellular terminal 20. The above described the variations concerning the determination on whether the cellular terminal 20 is located indoors or outdoors.

These methods also allow the positioning sever to appropriately perform the determination on indoors/outdoors for the cellular terminal 20. Namely, the above-described configurations also allow the positioning server to perform appropriate control on suitability of execution of GPS positioning, without actually carrying out the GPS positioning which takes some time for the determination on suitability of execution.

Even if the determination on indoors/outdoors for the cellular terminal 20 is carried out as described above, an error of determination is caused at a certain probability and an attempt to perform the GPS positioning can result in a failure of GPS positioning. The effectiveness estimating unit 15 can estimate the effectiveness of GPS positioning, using the information on a success or failure of GPS positioning, as described below.

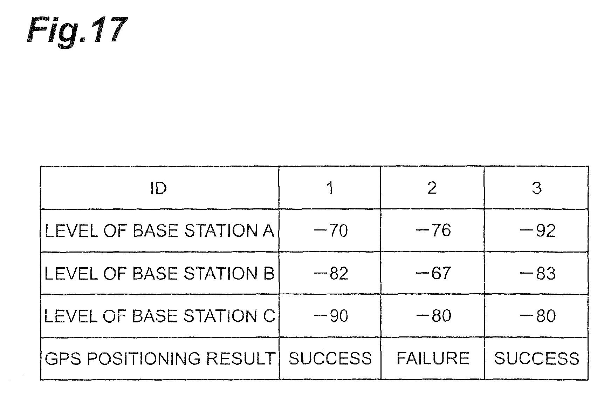

Specifically, first, the positioning server 10 is provided with a matching database storing information showing accuracies of GPS positioning according to intensities of radio communication signals received by cellular terminal 20. The matching database stores the information showing accuracies of GPS positioning according to intensities of radio communication signals received by cellular terminal 20, for example, in the form of a table as shown in Fig. 17. The information showing intensities of radio communication signals is reception levels of cellular terminal 20 for respective cellular base stations 30. The information showing accuracies of GPS positioning is information showing whether GPS positioning was successful or unsuccessful with the cellular terminal 20 at the foregoing reception levels. The matching database stores multiple sets of these pieces of information and each set is identified by ID. The reception levels of cellular terminal 20 for respective cellular base stations 30 correspond to a condition of the cellular terminal 20 such as the position of the cellular terminal 20.

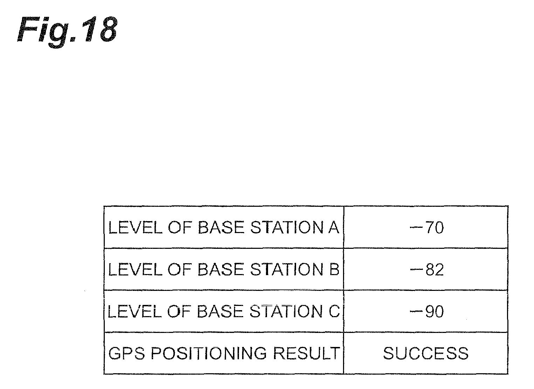

The data to be stored in the matching database is obtained by transmitting the data from the cellular terminal 20 to the positioning server 10 when the cellular terminal 20 performs the GPS positioning. The data is a correspondence between the information showing the result of a success or failure in GPS positioning and the information showing the reception levels of the cellular terminal 20 for respective cellular base stations 30 at that time, as shown in Fig. 18. The data to be stored in the matching database as described above may also be made using highly accurate calibration data obtained by a measuring device or the like, in addition to the data transmitted from the cellular terminal 20. In that case, the above data may be input off-line into the matching database of the positioning server by the administrator of the positioning server 10 or the like. The matching database, at the time of the estimation of effectiveness, is in a state in which each data is preliminarily stored as shown in Fig. 17. The information stored in the matching database does not always have to be actually measured data, but may be, for example, data obtained by simulation.

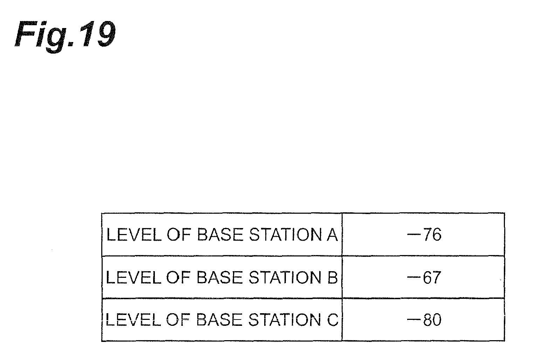

The effectiveness of GPS positioning is estimated using the above-described matching database as described below. First, the cellular communication unit 21 of the cellular terminal 20 receives a signal from a cellular base station 30 and transmits information showing a reception level thereof to the positioning server 10. If the cellular terminal 20 receives radio waves from a plurality of cellular base stations 30, it transmits information showing reception levels of the radio waves from the respective cellular base stations 30. For example, the information is information showing reception levels for respective cellular base stations 30, as shown in Fig. 19.

In the positioning server 10 the radio communication information acquiring unit 14 receives the information and outputs the information to the effectiveness estimating unit 15. The effectiveness estimating unit 15 compares the information received, with the information of reception levels stored in the matching database to perform matching (comparison). Namely, the effectiveness estimating unit 15 searches the information of reception levels stored in the matching database, for information equal or similar to the aforementioned received information (i.e., for information having small differences of reception levels, or information having a close tendency). This process may be carried out by the pattern matching technology. For example, in a case where the received information is the information shown in Fig. 19 and where the information stored in the matching database is the information shown in Fig. 17, it is determined that the received information corresponds to the information of ID "2," because the reception levels from the respective cellular base stations 30 are coincident with those of ID "2". Subsequently, the effectiveness estimating unit 15 acquires the information of success or failure in GPS positioning associated with the information corresponding to the received information, in the matching database. For example, in the case of the information of ID "2," the positioning result is "failure."

When the information of success or failure in GPS positioning acquired is "success," the effectiveness estimating unit 15 estimates that the GPS positioning is effective; when the information is "failure," the effectiveness estimating unit 15 estimates that the GPS positioning is not effective. The determination on indoors/outdoors may be made by the above method.

When a certain matching technique is applied to the above matching, there can be plural pieces of information (estimated points) of reception levels stored in the matching database, corresponding to the received information. Without selecting one of the plural pieces of corresponding information (estimated points), the effectiveness of GPS positioning may be determined by performing the determination on indoors/outdoors or the like by a method other than this method (e.g., any one of the above-described methods), using the pieces of information of reception levels, and statistically processing the results thereof.

The statistical processing with the determination results on N candidates is, for example, as follows: a threshold M is preliminarily stored; if the number of indoor determination results is larger than M, the cellular terminal 20 is determined to be located indoors and the GPS positioning is determined to be ineffective. The aforementioned indoors/ outdoors estimation 1 is used to estimate the building penetration loss Xi in the information of individual reception levels (estimated points), and when a statistical value of Xi, e.g., the average, median, maximum, minimum, or the like thereof is determined to be larger than a preliminarily stored threshold Y, the cellular terminal 20 is determined to be located indoors and the GPS positioning is determined to be ineffective. The above processing is carried out before the GPS positioning, in order to control the GPS positioning in the same manner as in the aforementioned embodiment. When there is only one point as the result of matching or when one point is selected as the result of matching, the determination on indoors/outdoors is not carried out for this point only, but the determination on indoors/outdoors is carried out for a predetermined range Xm around this point and the results thereof are also subjected to the statistical processing as above to determine the effectiveness of GPS positioning.

According to the above method, when the intensity of the radio communication signal received by the cellular terminal 20 is one according to a condition such as the position of the cellular terminal 20, the effectiveness of GPS positioning can be properly estimated based on the actual measurement results of GPS positioning or the like. Namely, this configuration also permits the positioning server to perform the appropriate control on suitability of execution of GPS positioning, without actually carrying out the GPS positioning which takes some time for the determination on suitability of execution.

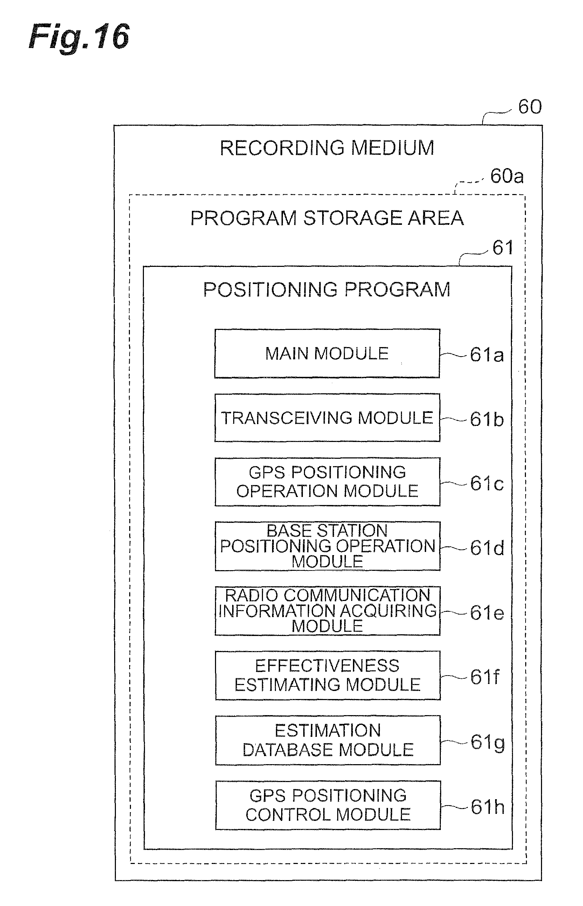

The following will describe a positioning program for letting a computer execute the above-described sequential processing of performing the positioning by positioning server 10. As shown in Fig. 16, the positioning program 61 is stored in a program storage area 60a formed in a recording medium 60 which the computer has.

The positioning program 61 is constructed with main module 61a for systematically controlling the positioning processing, transceiving module 61b, GPS positioning operation module 61c, base station positioning operation module 61d, radio communication information acquiring module 61e, effectiveness estimating module 61f, estimation database module 61g, and GPS positioning control module 61h. The functions implemented through execution of the transceiving module 61b, GPS positioning operation module 61c, base station positioning operation module 61 d, radio communication information acquiring module 61 e, effectiveness estimating module 61f, estimation database module 61g, and GPS positioning control module 61h are the same as the above-described functions of the transceiving unit 11, GPS positioning operation unit 12, base station positioning operation unit 13, radio communication information acquiring unit 14, effectiveness estimating unit 15, estimation database 16, and GPS positioning control unit 17 of the positioning server 10, respectively.

It is also possible to adopt a configuration wherein the positioning program 61 is transmitted in part or in all thereof through a transmission medium such as a communication line and received by another device to be recorded therein (including being installed).

**Claims**

1. A positioning system which estimates a position of a receiver having a radio communication function and a function to receive a signal used in GPS positioning, the positioning system comprising:

   radio communication information acquiring means to acquire information about radio communication in the receiver;
   effectiveness estimating means to estimate effectiveness of the GPS positioning, based on the information about the radio communication acquired by the radio communication information acquiring means; and
   GPS positioning controlling means to control execution of the GPS positioning of the receiver, based on the effectiveness estimated by the effectiveness estimating means.

2. The positioning system according to claim 1,
   wherein the radio communication function of the receiver is a cellular communication function, and
   wherein when the GPS positioning is not executed by the control on execution of the GPS positioning, the GPS positioning controlling means performs such a control as to perform positioning of the receiver, based on a signal transmitted and received between the receiver and a base station.

3. The positioning system according to claim 1 or 2, further comprising:

   a positioning accuracy database storing information showing an accuracy of GPS positioning according to a positioning location,

   wherein the radio communication function of the receiver is a cellular communication function,
   wherein the radio communication information acquiring means calculates an approximate position of the receiver as the information about the radio communication, based on a signal from a base station received by the receiver, and
   wherein the effectiveness estimating means estimates the effectiveness of the GPS positioning by referring to the positioning accuracy database to acquire the information showing the accuracy of GPS positioning, using the approximate position calculated by the radio communication information acquiring means, as the positioning location.

4. The positioning system according to claim 3, wherein the information showing the accuracy of GPS positioning contains information resulting from simulation of a reception condition of a radio wave from a GPS satellite according to the positioning location.

5. The positioning system according to claim 3 or 4, wherein the information showing the accuracy of GPS positioning is based on information showing a degree of shielding of a GPS satellite according to the positioning location.

6. The positioning system according to any one of claims 3 to 5, wherein the information showing the accuracy of GPS positioning is based on information showing a type of land according to the positioning location.

7. The positioning system according to any one of claims 3 to 6, wherein the information showing the accuracy of GPS positioning is based on information showing an accuracy of GPS positioning obtained by actual measurement according to the positioning location.

8. The positioning system according to any one of claims 3 to 7, wherein the information showing the accuracy of GPS positioning is based on a building coverage or floor-area ratio of land according to the positioning location.

9. The positioning system according to any one of claims 1 to 8, wherein the radio communication information acquiring means determines whether the receiver is located indoors, based on an intensity of a radio communication signal received by the receiver, and defines a result of the determination as the information about the radio communication.

10. The positioning system according to claim 9, wherein the radio communication information acquiring means determines whether the receiver is located indoors, based on a temporal change in intensity of a radio communication signal received by the receiver, and defines a result of the determination as the information about the radio communication.

11. The positioning system according to any one of claims 1 to 10, wherein the radio communication information acquiring means determines whether the receiver is located indoors, based on an originating source of a radio communication signal received by the receiver, and defines a result of the determination as the information about the radio communication.

12. The positioning system according to any one of claims 1 to 11, wherein the radio communication information acquiring means determines whether the receiver is located indoors, based on information contained in a radio communication signal received by the receiver, and defines a result of the determination as the information about the radio communication.

13. The positioning system according to any one of claims 1 to 12, further comprising:

   a matching database storing information showing an accuracy of GPS positioning according to an intensity of a radio communication signal received by the receiver,

   wherein the radio communication information acquiring means acquires information showing an intensity of a radio communication signal received by the receiver, as the information about the radio communication, and
   wherein the effectiveness estimating means estimates the effectiveness of the GPS positioning by comparing the information showing the intensity of the radio communication signal received by the receiver, acquired by the radio communication information acquiring means, with the information stored in the matching database.

14. The positioning system according to any one of claims 1 to 13, which is comprised of a positioning server connected to the receiver.

15. The positioning system according to any one of claims 1 to 13, which is comprised of the receiver.

16. A positioning method of estimating a position of a receiver having a radio communication function and a function to receive a signal used in GPS positioning, the positioning method comprising:

   a radio communication information acquiring step of acquiring information about radio communication in the receiver;
   an effectiveness estimating step of estimating effectiveness of the GPS positioning, based on the information about the radio communication acquired in the radio communication information acquiring step; and
   a GPS positioning controlling step of controlling execution of the GPS positioning of the receiver, based on the effectiveness estimated in the effectiveness estimating step.

17. A positioning program for letting a computer estimate a position of a receiver having a radio communication function and a function to receive a signal used in GPS positioning, the positioning program letting the computer execute:

   a radio communication information acquiring function to acquire information about radio communication in the receiver;
   an effectiveness estimating function to estimate effectiveness of the GPS positioning, based on the information about the radio communication acquired by the radio communication information acquiring function; and
   a GPS positioning controlling function to control execution of the GPS positioning of the receiver, based on the effectiveness estimated by the effectiveness estimating function.

*Fig.1*

CELLULAR TERMINAL (20)
- DATA STORAGE UNIT (23)
- GPS RECEIVING UNIT (22)
- CELLULAR COMMUNICATION UNIT (21)

40

CELLULAR BASE STATION (30)

POSITIONING SERVER (10)
- TRANSCEIVING UNIT (11)
- GPS POSITIONING CONTROL UNIT (17)
- RADIO COMMUNICATION INFORMATION ACQUIRING UNIT (14)
- EFFECTIVENESS ESTIMATING UNIT (15)
- ESTIMATION DATABASE (16)
- BASE STATION POSITIONING OPERATION UNIT (13)
- GPS POSITIONING OPERATION UNIT (12)

# Fig.2

CELLULAR TERMINAL — 20

- 201 CPU
- 202 RAM
- 203 ROM
- 204 OPERATING UNIT
- 206 CELLULAR COMMUNICATION MODULE — 207
- 205 DISPLAY
- 208 GPS RECEIVING MODULE — 209

# Fig.3

| MESH No. | MESH SIZE | MEDIAL LATITUDE OF MESH | MEDIAL LONGITUDE OF MESH | VARIANCE (F) OF RECEPTION TIMING | GPS POSITIONING ACCURACY |
|----------|-----------|-------------------------|--------------------------|----------------------------------|--------------------------|
| 1 | 30m | 35.987650 | 135.76850 | 3 | GOOD |
| 2 | 30m | 35.987660 | 135.76850 | 300 | POOR |
| 3 | 30m | 35.987670 | 135.76850 | 5 | GOOD |

EP 2 144 078 A1

# Fig.4

# Fig.5

BASE STATION A

BASE STATION B

RECEPTION LEVEL OF
BASE STATION A MEASURED
BY TERMINAL (m1)

OUTDOOR RECEPTION
LEVEL CURVE
(BASE STATION B)

OUTDOOR RECEPTION
LEVEL CURVE (BASE STATION A)

RECEPTION LEVEL

POSITION

p2    pt    p1

RECEPTION LEVEL OF
BASE STATION B MEASURED
BY TERMINAL (m2)

# *Fig.6*

(a)

(b)

# Fig.7

| BASE STATION NAME | INDOOR/OUTDOOR |
|---|---|
| BASE STATION A | OUTDOOR |
| BASE STATION B | OUTDOOR |
| BASE STATION C | INDOOR |
| BASE STATION D | INDOOR |
| BASE STATION E | OUTDOOR |

# Fig.8

(a)

| BASE STATION OF RECEIVED SIGNAL | RECEPTION LEVEL |
|---|---|
| BASE STATION B | 65 |
| BASE STATION C | 45 |

(b)

| BASE STATION OF RECEIVED SIGNAL | RECEPTION LEVEL |
|---|---|
| BASE STATION A | 87 |
| BASE STATION B | 32 |
| BASE STATION E | 36 |

# Fig.9

| TAG NAME | INDOOR/OUTDOOR |
|----------|----------------|
| TAG A | OUTDOOR |
| TAG B | OUTDOOR |
| TAG C | INDOOR |
| TAG D | INDOOR |
| TAG E | OUTDOOR |

# Fig.10

(a)

| TAG OF RECEIVED SIGNAL |
| --- |
| TAG B |
| TAG C |

(b)

| TAG OF RECEIVED SIGNAL |
| --- |
| TAG A |
| TAG B |
| TAG E |

# *Fig.11*

| WIRELESS LAN ADDRESS NAME | INDOOR/OUTDOOR |
|---|---|
| WIRELESS LAN ADDRESS A | OUTDOOR |
| WIRELESS LAN ADDRESS B | OUTDOOR |
| WIRELESS LAN ADDRESS C | INDOOR |
| WIRELESS LAN ADDRESS D | INDOOR |
| WIRELESS LAN ADDRESS E | OUTDOOR |

# Fig.12

(a)

| WIRELESS LAN ADDRESS OF RECEIVED SIGNAL |
| --- |
| WIRELESS LAN ADDRESS B |
| WIRELESS LAN ADDRESS C |

(b)

| WIRELESS LAN ADDRESS OF RECEIVED SIGNAL |
| --- |
| WIRELESS LAN ADDRESS A |
| WIRELESS LAN ADDRESS B |
| WIRELESS LAN ADDRESS E |

# Fig.13

10

POSITIONING SERVER

101

CPU

104

COMMUNICATION
MODULE

102

RAM

105

AUXILIARY
STORAGE

103

ROM

# Fig.14

```
                    ┌─────────┐
                    │  START  │
                    └─────────┘
                         │
                         │         S01
            ┌────────────────────────────┐
            │      ACQUIRE RADIO          │
            │ COMMUNICATION INFORMATION   │
            └────────────────────────────┘
                         │
                         │         S02
                    ╱ ESTIMATE ╲
                  ╱  WHETHER INDOORS ╲  INDOORS
                  ╲   OR OUTDOORS   ╱─────────────┐
                    ╲           ╱                 │
                     OUTDOORS                     │
                         │         S03            │
                    ╱ ESTIMATE ╲                  │
                  ╱  ACCURACY OF GPS ╲  POOR       │
                  ╲   POSITIONING   ╱─────────────┤
                    ╲           ╱                 │
                     GOOD     S04                 │
            ┌────────────────────────────┐        │
            │      GPS POSITIONING        │        │
            └────────────────────────────┘        │
                         │                        │
                         │         S05            │
                    ╱   IS    ╲                   │
                  ╱ POSITIONING ╲   NO             │
                  ╲ SUCCESSFUL  ╱─────────────────┤
                    ╲   ?    ╱                    │
                     YES                          │
                      │                           │         S06
                      │              ┌────────────────────────────┐
                      │              │      BASE STATION           │
                      │              │      POSITIONING            │
                      │              └────────────────────────────┘
                      │                           │
                      │                           │         S07
                      │                      ╱   IS    ╲
                      │        YES         ╱ POSITIONING ╲
                      │◄───────────────────╲ SUCCESSFUL  ╱
                      │                      ╲   ?    ╱
                      │                         NO
                      │                           │
                ┌─────────┐                ┌─────────┐
                │ SUCCESS │                │ FAILURE │
                └─────────┘                └─────────┘
```

## Fig.15

```
                    ┌─────────┐
                    │  START  │
                    └────┬────┘
         ┌───────────────┴───────────────┐
      ┌S12                             ┌S11
 ┌──────────────┐          ┌──────────────────────────┐
 │     GPS      │          │      ACQUIRE RADIO       │
 │ POSITIONING  │          │ COMMUNICATION INFORMATION │
 └──────┬───────┘          └────────────┬─────────────┘
        │                               │ ┌S13
        │                        ◇ ESTIMATE ◇  INDOORS
        │                        WHETHER INDOORS OR ─────┐
        │                           OUTDOORS            │
        │                               │               │
        │                          OUTDOORS             │
        │                               │ ┌S14          │
        │                        ◇ ESTIMATE ◇  POOR     │
        │                        ACCURACY OF GPS ───────┤
        │                          POSITIONING          │
        │                               │               │
        │                             GOOD              │
        │◄─────────────────────────────┘               │
        │                                          ┌S15 │
        │                             ┌──────────────────┐
        │                             │  SUSPEND GPS     │
        │                             │  POSITIONING     │
        │                             └────────┬─────────┘
        │ ┌S16                                 │
     ◇   IS   ◇                                │
     POSITIONING      NO                       │
     SUCCESSFUL ───────────────────────────────┤
         ?                                      │
        YES                                     │
        │                                  ┌S17 │
        │                       ┌──────────────────┐
        │                       │  BASE STATION    │
        │                       │  POSITIONING     │
        │                       └────────┬─────────┘
        │                                │ ┌S18
        │                         ◇   IS   ◇
        │            YES          POSITIONING
        │◄───────────────────────SUCCESSFUL
        │                             ?
        │                            NO
        │                             │
   ┌─────────┐                  ┌──────────┐
   │ SUCCESS │                  │ FAILURE  │
   └─────────┘                  └──────────┘
```

# Fig.16

RECORDING MEDIUM ~60

PROGRAM STORAGE AREA ~60a

POSITIONING PROGRAM ~61

MAIN MODULE ~61a

TRANSCEIVING MODULE ~61b

GPS POSITIONING OPERATION MODULE ~61c

BASE STATION POSITIONING OPERATION MODULE ~61d

RADIO COMMUNICATION INFORMATION ACQUIRING MODULE ~61e

EFFECTIVENESS ESTIMATING MODULE ~61f

ESTIMATION DATABASE MODULE ~61g

GPS POSITIONING CONTROL MODULE ~61h

*Fig.17*

| ID | 1 | 2 | 3 |
|---|---|---|---|
| LEVEL OF BASE STATION A | −70 | −76 | −92 |
| LEVEL OF BASE STATION B | −82 | −67 | −83 |
| LEVEL OF BASE STATION C | −90 | −80 | −80 |
| GPS POSITIONING RESULT | SUCCESS | FAILURE | SUCCESS |

*Fig.18*

| | |
|---|---|
| LEVEL OF BASE STATION A | −70 |
| LEVEL OF BASE STATION B | −82 |
| LEVEL OF BASE STATION C | −90 |
| GPS POSITIONING RESULT | SUCCESS |

*Fig.19*

| LEVEL OF BASE STATION A | −76 |
|---|---|
| LEVEL OF BASE STATION B | −67 |
| LEVEL OF BASE STATION C | −80 |

**Europäisches Patentamt**
**European Patent Office**
**Office européen des brevets**

# EUROPEAN SEARCH REPORT

**Application Number**

EP 09 16 4996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 1 788 405 A1 (SNAPTRACK INC [US]) 23 May 2007 (2007-05-23)<br>* paragraph [0010] - paragraph [0012] *<br>* paragraph [0019] - paragraph [0022]; figure 1 *<br>* paragraph [0027] - paragraph [0034] *<br>* paragraph [0038] - paragraph [0064]; figures 4-7 *<br>* paragraph [0089] - paragraph [0096] *<br>----- | 1,3-17<br><br>2 | INV.<br>G01S5/14<br>H04W64/00 |
| X<br>A | US 5 982 324 A (WATTERS J MICHAEL [CA] ET AL) 9 November 1999 (1999-11-09)<br>* column 4, line 36 - column 5, line 13 *<br>* column 6, line 30 - column 7, line 57 *<br>* column 19, line 31 - column 23, line 2; figures 10-12 *<br>----- | 1-3,<br>14-17<br>4-13 | |
| X<br>A | US 2007/123250 A1 (BOND DAVID [GB]) 31 May 2007 (2007-05-31)<br>* paragraph [0003] - paragraph [0018] *<br>* paragraph [0027] - paragraph [0040]; figures 1-2 *<br>----- | 1,3,7,<br>13-17<br>4-6,8-12 | |
| X<br>A | EP 1 251 362 A2 (PIONEER CORP [JP]) 23 October 2002 (2002-10-23)<br>* paragraph [0001] - paragraph [0016] *<br>* paragraph [0022] - paragraph [0027]; figure 1 *<br>* paragraph [0040] *<br>* paragraph [0084] - paragraph [0105]; figure 6 *<br>* paragraph [0115] *<br>----- | 1-2,<br>14-17<br>3-13 | TECHNICAL FIELDS SEARCHED (IPC)<br><br>G01S<br>H04W |

The present search report has been drawn up for all claims

| Place of search | Date of completion of the search | Examiner |
|---|---|---|
| Munich | 19 November 2009 | Haugg, Sabine |

EPO FORM 1503 03.82 (P04C01)

## ANNEX TO THE EUROPEAN SEARCH REPORT
## ON EUROPEAN PATENT APPLICATION NO.

EP 09 16 4996

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2009

| Patent document cited in search report | | Publication date | Patent family member(s) | | Publication date |
|---|---|---|---|---|---|
| EP 1788405 | A1 | 23-05-2007 | AT | 404882 T | 15-08-2008 |
| | | | AT | 414914 T | 15-12-2008 |
| | | | AT | 416388 T | 15-12-2008 |
| | | | AU | 770440 B2 | 19-02-2004 |
| | | | AU | 3349800 A | 18-08-2000 |
| | | | BR | 0007834 A | 15-06-2004 |
| | | | CA | 2359662 A1 | 03-08-2000 |
| | | | CA | 2634618 A1 | 03-08-2000 |
| | | | CA | 2634677 A1 | 03-08-2000 |
| | | | CN | 1351716 A | 29-05-2002 |
| | | | CN | 101025439 A | 29-08-2007 |
| | | | EP | 1166145 A2 | 02-01-2002 |
| | | | EP | 1775598 A2 | 18-04-2007 |
| | | | EP | 2037290 A1 | 18-03-2009 |
| | | | ES | 2312334 T3 | 01-03-2009 |
| | | | ES | 2316104 T3 | 01-04-2009 |
| | | | ES | 2316107 T3 | 01-04-2009 |
| | | | HK | 1044377 A1 | 12-10-2007 |
| | | | HK | 1108185 A1 | 29-05-2009 |
| | | | JP | 4270757 B2 | 03-06-2009 |
| | | | JP | 2003514215 T | 15-04-2003 |
| | | | JP | 2009031278 A | 12-02-2009 |
| | | | JP | 2009168804 A | 30-07-2009 |
| | | | MX | PA01007686 A | 14-10-2003 |
| | | | NO | 20013755 A | 25-09-2001 |
| | | | WO | 0045191 A2 | 03-08-2000 |
| US 5982324 | A | 09-11-1999 | NONE | | |
| US 2007123250 | A1 | 31-05-2007 | DE 102006056407 A1 | | 31-05-2007 |
| | | | GB | 2432996 A | 06-06-2007 |
| EP 1251362 | A2 | 23-10-2002 | JP | 2002320254 A | 31-10-2002 |
| | | | US | 2002175854 A1 | 28-11-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Takeyasu Isaka.** GPS Gijutsu Nyumon. Tokyo Denki University Press, 28 February 2003